(19) Europäisches Patentamt
European Patent Office
Office européen des brevets

(11) **EP 3 258 135 A1**

(12) **EUROPEAN PATENT APPLICATION**
published in accordance with Art. 153(4) EPC

(43) Date of publication:
**20.12.2017 Bulletin 2017/51**

(51) Int Cl.:
**F16H 57/04** (2010.01)

(21) Application number: **15894890.1**

(22) Date of filing: **08.06.2015**

(86) International application number:
**PCT/JP2015/066521**

(87) International publication number:
**WO 2016/199205 (15.12.2016 Gazette 2016/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Komatsu Ltd.**
**Minato-ku**
**Tokyo 107-8414 (JP)**

(72) Inventors:
• **KODAMA, Osamu**
  **Komatsu-shi**
  **Ishikawa 923-0392 (JP)**
• **NAKADA, Fumiaki**
  **Komatsu-shi**
  **Ishikawa 923-0392 (JP)**
• **NAITO, Shinichi**
  **Oyama-shi**
  **Tochigi 323-8558 (JP)**

(74) Representative: **Flügel Preissner Schober Seidel**
**Patentanwälte PartG mbB**
**Nymphenburger Strasse 20**
**80335 München (DE)**

(54) **POWER TRANSMISSION DEVICE AND WORKING VEHICLE WITH POWER TRANSMISSION DEVICE**

(57)    A power transmission device includes a boss section, a spline shaft, a rotational force transmission section, and a housing. The boss section includes a spline groove on the internal circumferential surface thereof. The spline shaft fits to the spline groove. The rotational force transmission section is coupled with the boss section or the spline shaft. The housing includes: an oil sump section for retaining a lubricating oil; an oil inlet path for introducing the lubricating oil into the oil sump section; and an oil drain path for draining the lubricating oil retained in the oil sump section. The oil sump section is in communication with a fitting section where the spline shaft and the spline groove are fitted to each other. The oil drain path is positioned higher than the lower end of the spline groove.

FIG. 4

## Description

### Field

The present description discloses a power transmission device for a work vehicle.

### Background

A power transmission device has a function for distributing the driving power generated by one power generation source such as an engine, to a plurality of driven devices (for example, a speed reduction gear or a hydraulic pump and the like), and for integrating the driving power generated by the plurality of power generation sources. A spline fitting in a portion for coupling each of the rotating members of the plurality of power generation sources and the plurality of driven devices is often used in this type of power transmission device. A lubrication structure is used in order to prevent wear and damage to the spline fitting section.

Patent Document No. 1 describes an example of a lubrication structure for a coupling section that has a spline groove on the internal circumferential surface of a motor shaft and in which the pump shaft of a hydraulic pump acts as the spline shaft that fits to the spline groove. An annular oil sump chamber is formed around the pump shaft and the motor shaft and a spline fitting section for the pump shaft and the motor shaft is lubricated by lubricating oil that fills the oil sump chamber in the invention as in Patent Document No. 1.

### Prior Art Documents

### References

Patent Document No. 1: Japanese Laid-open Patent Publication No. 2013-241792

### Summary of the Invention

### Technical Problem

However, because the structure in Patent Document No. 1 does not take into account the circulation of the lubricating oil that fills the oil sump chamber, degradation of the filled lubricating oil occurs which leads to a drop in lubricity.

The present description discloses a power transmission device having a structure in which a reduction in the lubricity of a spline fitting section can be suppressed, and a work vehicle provided with the power transmission device.

### Solution to Problem

A power transmission device according to the present invention includes a boss section, a spline shaft, a rotational force transmission section, and a housing. The boss section has a spline groove on the internal circumferential surface thereof. The spline shaft fits to the spline groove. The rotational force transmission section is coupled with the boss section or the spline shaft. The housing includes: an oil sump section for retaining lubricating oil; an oil inlet path for introducing the lubricating oil into the oil sump section; and an oil drain path for draining the lubricating oil retained in the oil sump section. The oil sump section is in communication with a fitting section where the spline shaft and the spline groove are fitted to each other. The oil drain path is positioned higher than the lower end of the spline groove.

The housing or the boss section may include a protruding section positioned on the axial inward side of the oil sump section.

The power transmission device may further include a bearing for rotatably supporting the boss section. The protruding section may overlap the region between an inner ring and an outer ring of the bearing as seen in the direction of the rotational axis of the bearing.

The oil drain path may further be positioned higher than the upper end of the spline groove.

The boss section may include an oil drain hole that extends from a lubricating oil intake port positioned on the internal circumferential surface further to the axial depth side than the spline groove, to a lubricating oil drainage port positioned on the external circumferential surface of the boss section.

The protruding section may be provided on the housing. In this case, a first gap may be provided between the protruding section and the boss section. At least a portion of the first gap may be positioned further to the axial inward side than an oil discharge port of the oil inlet path and a drain port of the oil drain path. The oil drain path may pass through the protruding section in the axial direction. Alternatively, the oil drain path may be provided in the housing, may extend to the outside in the radial direction from the discharge port positioned further in the radial outward direction than the protruding section, and may pass through the housing. The power transmission device may further include a first seal that seals the first gap.

The power transmission device may be provided with a second gap between the protruding section and the inner ring of the bearing. At least a portion of the second gap may be positioned further to the axial inward side than the oil discharge port of the oil inlet path and the drain port of the oil drain path. The oil drain path may pass through the protruding section in the axial direction. Alternatively, the oil drain path may be provided in the housing, may extend in the radial outward direction from the drain port positioned further to the axial outward side than the protruding section, and may pass through the housing. The power transmission device may further include a second seal that seals the second gap.

The protruding section may be provided on the boss section. In this case, a third gap may be provided between the protruding section and the housing. At least a portion of the third gap may be positioned further to the axial inward side than the oil discharge port of the oil inlet path and the drain port of the oil drain path. The oil drain path may be provided in the housing, may extend in the radial outward direction from the drain port positioned further to axial outward side than the protruding section, and may pass through the housing. The power transmission device may further include a third seal that seals the third gap.

The power transmission device may be provided with a fourth gap between the protruding section and the outer ring of the bearing. At least a portion of the fourth gap may be positioned further to the axial inward side than the oil discharge port of the oil inlet path and the drain port of the oil drain path. The oil drain path may be provided in the housing, may extend in the radial outward direction from the drain port positioned further in the axial outward direction than the protruding section, and may pass through the housing. The power transmission device may further include a fourth seal that seals the fourth gap.

The protruding section may be formed as a separate part from the boss section and from the housing. The protruding section may be fixed to the boss section or the housing.

The amount per unit of time of the lubricating oil flowing into the oil sump section from the oil inlet path may be equal to or greater than the amount per unit of time of the lubricating oil flowing out from a location other than the oil drain path of the oil sump section. The amount per unit of time of the lubricating oil flowing into the oil sump section from the oil inlet path may be equal to the total amount of the amount per unit of time of the lubricating oil flowing out from the oil drain path and the amount per unit of time of the lubricating oil flowing out from the location other than the oil drain path.

The lubricating oil flowing out from the locations other than the oil drain path may include the lubricating oil flowing out from the fitting section where the spline shaft and the spline groove are fitted to each other. When the first gap is provided, the lubricating oil flowing out from the location other than the oil drain path may include the lubricating oil flowing out from the first gap. When the second gap is provided, the lubricating oil flowing out from the location other than the oil drain path may include the lubricating oil flowing out from the second gap. When the third gap is provided, the lubricating oil flowing out from the location other than the oil drain path may include the lubricating oil flowing out from the third gap. When the fourth gap is provided, the lubricating oil flowing out from the location other than the oil drain path may include the lubricating oil flowing out from the fourth gap.

A work vehicle according to the present invention may include the aforementioned power transmission device and a first external connection apparatus. The first external connection apparatus may be fixed to the housing. The first external connection apparatus may include a spline shaft. The oil sump section may be formed within a region surrounded by the first external connection apparatus, the protruding section, the boss section, and the spline shaft.

The work vehicle may further include a second external connection apparatus fixed to a side surface of the housing which is the side opposite the side surface of the housing where the first external connection apparatus is fixed, the second external connection apparatus including a drive shaft inserted into a hole section of the boss section.

The work vehicle may further include a driving source, a transmission, and a power train. The driving source may include an output shaft that rotates around a rotating shaft different from the spline shaft. The transmission may be coupled to the output shaft. The power train may be coupled to the output shaft and may transmitting a portion of the driving power from the driving source to the rotational force transmission section.

**Effects of Invention**

In the above power transmission device, at least a portion of a spline fitting section where the spline groove and the spline shaft are fitted to each other is reliably covered in the lubricating oil and reliably lubricated. Moreover, when the lubricating oil supplied from the oil inlet path in the oil sump section is accommodated up to the height of the oil drain path, a sufficient amount of the lubricating oil is drained by the oil drain path. In this way, the lubricating oil of the spline fitting section circulates without being retained, and consequently a favorable lubricity can be maintained. Therefore, wear and damage to the spline fitting section due to poor lubrication, or more specifically, wear and damage to the spline teeth surfaces, is prevented.

## Brief Description of Drawings

FIG. 1 is a side view of a work vehicle according to an embodiment of the present invention.
FIG. 2 is a schematic view of a configuration of the work vehicle.
FIG. 3 is a schematic view of an example of a lubrication system for a power transmission device.
FIG. 4 is a cross-sectional view of a lubrication structure of the power transmission device according to a first embodiment.
FIG. 5 is a view of a housing seen from the axial outward side according to the first embodiment.
FIG. 6 is a cross-sectional view as seen from cross-sectional plane II-II' in FIG. 5.
FIG. 7 is a cross-sectional view of a lubrication structure of the power transmission device according to a second embodiment.
FIG. 8 is a cross-sectional view of a lubrication structure of the power transmission device according to a third embodiment.
FIG. 9 is a view of a housing seen from axial outward side according to the third embodiment.
FIG. 10 is a cross-sectional view of a lubrication structure of the power transmission device according to a fourth embodiment.
FIG. 11 is a cross-sectional view of a lubrication structure of the power transmission device according to a fifth embodiment.
FIG. 12 is a view of a housing seen from the axial outward side according to the fifth embodiment.
FIG. 13 is a cross-sectional view as seen from cross-sectional plane V-V' in FIG. 12.
FIG. 14 is a cross-sectional view of a lubrication structure of the power transmission device according to a sixth embodiment.
FIG. 15 illustrates a first modified example.
FIG. 16 illustrates a second modified example.
FIG. 17 illustrates a third modified example.
FIG. 18 illustrates a fourth modified example.
FIG. 19 illustrates a fifth modified example.

## Description of Embodiments

(Overall configuration of work vehicle)

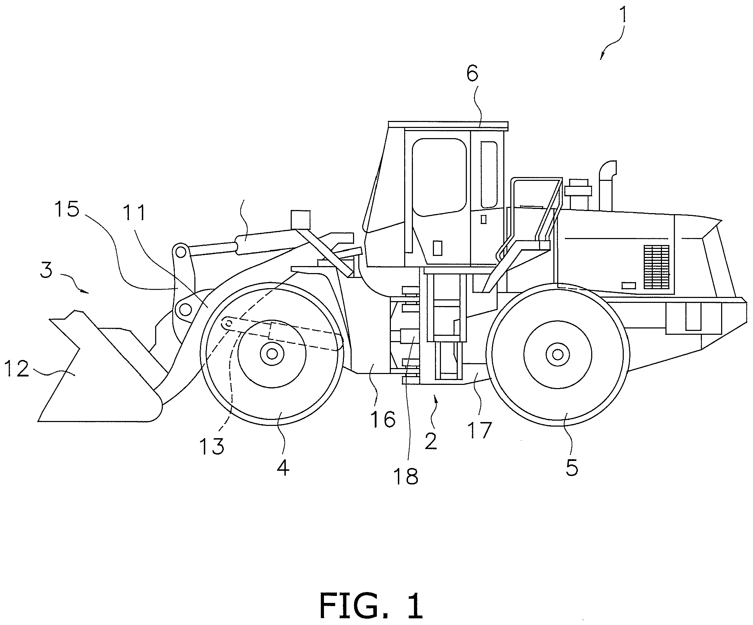

FIG. 1 illustrates an overall configuration of a work vehicle 1 which includes a lubrication structure according to a first embodiment of the present invention. The work vehicle 1 is, for example, a wheel loader. As illustrated in FIG. 1, the work vehicle 1 includes a vehicle body frame 2, a work implement 3, traveling wheels 4 and 5, and an operator's cab 6. The work vehicle 1 travels by rotating and driving the traveling wheels 4 and 5. The work vehicle 1 is able to carry out work such as excavation by using the work implement 3.

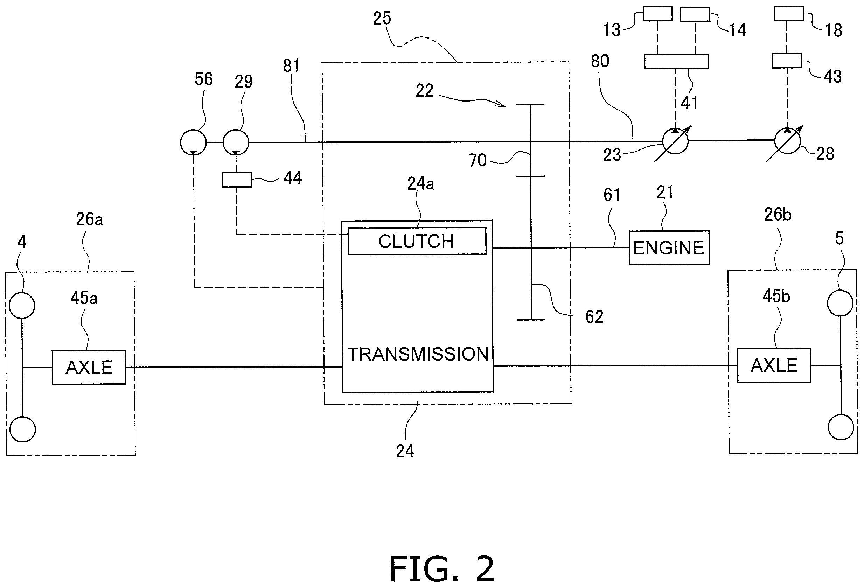

The vehicle body frame 2 includes a front frame 16 and a rear frame 17. The front frame 16 and the rear frame 17 are attached to each other in a manner that allows tilting in the left-right direction. The work implement 3 and the traveling wheels 4 are attached to the front frame 16. The work implement 3 is driven by hydraulic fluid from a belowmentioned work implement pump 23 (see FIG. 2). The work implement 3 includes a boom 11 and a bucket 12. The boom 11 is mounted onto the front frame 16.

The work implement 3 has a lift cylinder 13 and a bucket cylinder 14. The lift cylinder 13 and the bucket cylinder 14 are hydraulic cylinders. One end of the lift cylinder 13 is attached to the front frame 16. The other end of the lift cylinder 13 is attached to the boom 11. The boom 11 rotates up and down due to the extension and contraction of the lift cylinder 13 with hydraulic fluid from the work implement pump 23.

The bucket 12 is attached to the tip of the boom 11. One end of the bucket cylinder 14 is attached to the front frame 16. The other end of the bucket cylinder 14 is attached to the bucket 12 via a bell crank 15. The bucket 12 rotates up and down due to the extension and contraction of the bucket cylinder 14 with hydraulic fluid from the work implement pump 23.

The operator's cab 6 and the traveling wheels 5 are attached to the rear frame 17. A seat on which an operator sits, a monitor for displaying various states inside the work vehicle 1 to the operator, and an operating device and the like are disposed inside the operator's cab 6.

The work vehicle 1 includes a steering cylinder 18. The steering cylinder 18 is attached to the front frame 16 and the rear frame 17. The steering cylinder 18 is a hydraulic cylinder. The front frame 16 and the rear frame 17 of the work vehicle 1 are tilted in the left-right direction due to the extension and contraction of the steering cylinder 18 due to hydraulic fluid from a belowmentioned steering pump 28. Consequently, the traveling direction of the work vehicle 1 is changed to the left or right.

FIG. 2 is a schematic view of a configuration of the work vehicle 1 according to an embodiment of the present invention. As illustrated in FIG. 2, the work vehicle 1 includes an engine 21, a PTO 22, a transmission 24, and travel devices 26a and 26b. The PTO 22 and the transmission 24 are referred to collectively as a power transmission device 25 in the present embodiment.

The engine 21 is a driving source for the work vehicle 1 and is, for example, a diesel engine. The output of the engine 21 is controlled by adjusting the amount of air and the amount of fuel injected into the cylinders of the engine 21.

The work vehicle 1 includes, for example, a work implement pump 23, the steering pump 28, a transmission pump 29, and a lubricating oil pump 56. The work implement pump 23, the steering pump 28, the transmission pump 29, and the lubricating oil pump 56 may be referred to as external connection apparatuses in the present embodiment. The work implement pump 23, the steering pump 28, the transmission pump 29, and the lubricating oil pump 56 are hydraulic pumps. The PTO 22 transmits a portion of the driving power from the engine 21 to the hydraulic pumps 23, 28, 29 and 56. That is, the PTO 22 distributes the driving power from the engine 21 to the hydraulic pumps 23, 28, 29 and 56 and to the transmission 24.

The work implement pump 23 is driven by driving power from the engine 21. Oil discharged from the work implement pump 23 is supplied to the abovementioned lift cylinder 13 and the bucket cylinder 14 through a work implement control valve 41. The work implement pump 23 is, for example, a variable displacement hydraulic pump. The discharge displacement of the work implement pump 23 is changed by changing the tilt angle of a swash plate or an inclined shaft of the work implement pump 23.

The steering pump 28 is driven by driving power from the engine 21. Oil discharged from the steering pump 28 is supplied to the abovementioned steering cylinder 18 through a steering control valve 43. The steering pump 28 is, for example, a variable displacement hydraulic pump. The discharge displacement of the steering pump 28 is changed by changing the tilt angle of a swash plate or an inclined shaft of the steering pump 28.

The transmission pump 29 is driven by driving power from the engine 21. The transmission pump 29 is, for example, a fixed displacement hydraulic pump. Oil discharged from the transmission pump 29 is supplied to a clutch 24a of the transmission 24 via a clutch control valve 44. The oil discharged from the transmission pump 29 is supplied to the power transmission device 25 and may be used for lubricating the various gears, bearings and sliding parts of the power transmission device 25.

The lubricating oil pump 56 is driven by driving power from the engine 21. The lubricating oil pump 56 is, for example, a fixed displacement hydraulic pump. The oil discharged from the lubricating oil pump 56 is supplied to the power transmission device 25 and may be used for lubricating the various gears, bearings and sliding parts of the power transmission device 25. As explained below, the oil supplied to the power transmission device 25 for lubricating the various gears, bearings and sliding parts of the power transmission device 25 among the oil discharged from the abovementioned pumps, is a lubricating oil. If the lubricating oil is supplied to the power transmission device 25 by the transmission pump 29, the lubricating oil pump 56 may be omitted.

The PTO 22 distributes the driving power from the engine 21 to the transmission 24 and the belowmentioned external connection apparatuses. In FIG. 2, the work vehicle 1 is depicted as having one PTO 22, but the work vehicle 1 may have a plurality of PTOs 22. The PTO 22 includes a drive gear 62 and a PTO gear 70. The drive gear 62 is coupled to an output shaft 61 of the engine 21 that rotates around a rotating shaft different from a first drive shaft 80 and a second drive shaft 81. The PTO gear 70 meshes with the drive gear 62. The drive gear 62 couples the first drive shaft 80 and the second drive shaft 81 through the PTO gear 70. The drive gear 62 transmits a portion of the driving power from the engine 21 to the PTO gear 70. In the following explanation, the drive gear 62 may be referred to as a power train.

The first drive shaft 80 is a rotating drive shaft of a first external connection apparatus (for example, the work implement pump 23, the steering pump 28). The second drive shaft 81 is a rotating drive shaft of a second external connection apparatus (for example, the transmission pump 29, the lubricating oil pump 56). The first drive shaft 80 and the second drive shaft 81 are coupled to the PTO gear 70. The first drive shaft 80 and the second drive shaft 81 are coupled to the PTO gear 70, for example, with a spline fit. A portion of the driving power from the engine 21 is transmitted to the first drive shaft 80 and the second drive shaft 81, and the first drive shaft 80 and the second drive shaft 81 respectively drive the first external connection apparatus and the second external connection apparatus.

The PTO gear 70 may mesh with the drive gear 62 via an idler gear that is not illustrated. FIG. 2 illustrates a case in which the first external connection apparatus is the work implement pump 23 and the steering pump 28, and the second external connection apparatus is the transmission pump 29 and the lubricating oil pump 56. However, the first external connection apparatus may include at least one of the transmission pump 29 and the lubricating oil pump 56, and the second external connection apparatus may include at least one of the work implement pump 23 and the steering pump 28. Moreover, the first external connection apparatus or the second external connection apparatus may also be a fan pump or another device. Furthermore, the second external connection apparatus may be omitted.

The transmission 24 is coupled to the output shaft 61 of the engine 21. The transmission 24 transmits the driving power from the engine 21 to the travel device 26a of the front wheel shaft and the travel device 26b of the rear wheel shaft. The transmission 24 changes the speed and outputs the driving power from the engine 21 by switching a transmission gear ratio by engaging or disengaging the clutch 24a.

The travel device 26a of the front wheel shaft includes an axle 45a of the front wheel shaft and traveling wheels 4 of the front wheel shaft. The travel device 26b of the rear wheel shaft has an axle 45b of the rear wheel shaft and traveling wheels 5 of the rear wheel shaft. The travel devices 26a and 26b are driven by the engine 21 via the transmission 24. The axles 45a and 45b transmit the driving power from the transmission 24 to the traveling wheels 4 and 5. As a result, the traveling wheels 4 and 5 are rotated and driven.

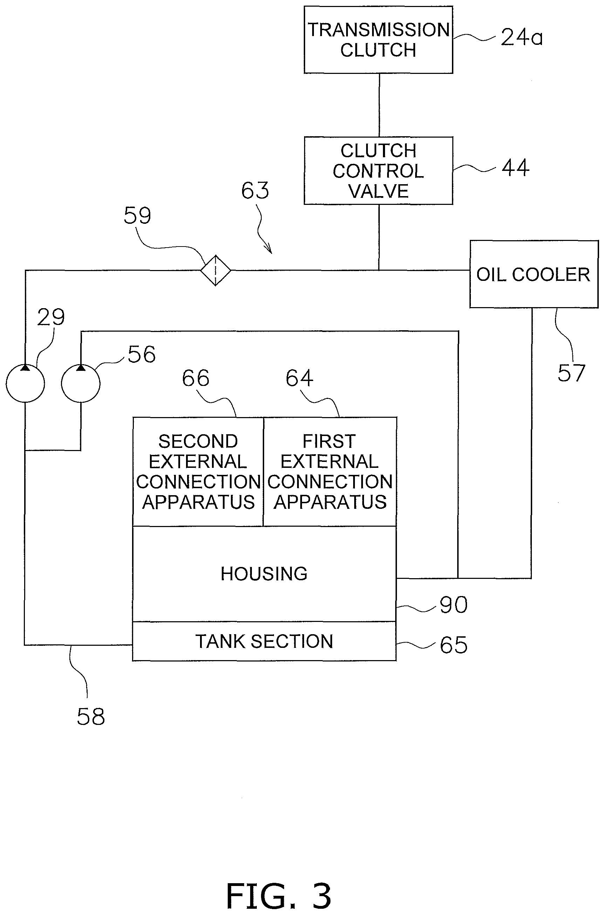

The following is an explanation of a lubrication system 63 of the power transmission device 25. FIG. 3 is a schematic view of an example of a configuration of the lubrication system 63 of the power transmission device 24. The lubrication system 63 causes lubricating oil for lubricating the power transmission device 25 to circulate. As illustrated in FIG. 3, the lubrication system 63 includes the transmission pump 29, the lubricating oil pump 56, an oil cooler 57, a pipe 58, and a filter 59. The transmission pump 29, the lubricating oil pump 56, the oil cooler 57, and the filter 59 are connected to a housing 90 via the pipe 58.

While FIG. 3 illustrates an example in which two hydraulic pumps including the transmission pump 29 and the lubricating oil pump 56 are included in the lubrication system 63, only the transmission pump 29 may be included in the lubrication system 63. Moreover, the lubrication system 63 may include a plurality of the transmission pumps 29 and lubricating oil pumps 56.

The housing 90 is a case for accommodating the configuration elements of the power transmission device 25 such as the various gears (including the drive gear 62 and the PTO gear 70 of the PTO 22) of the power transmission device 25 or the clutch 24a of the transmission 24. The first external connection apparatus 64 and the second external connection apparatus 66, which respectively include at least one of the work implement pump 23, the steering pump 28, the transmission pump 29, and the lubricating oil pump 56, for example, are attached to the housing 90. That is, the power transmission device 25 is connected to the first external connection apparatus 64 and the second external connection apparatus 66. The filter 59 is provided in the pipe 58 between the transmission pump 29 and the clutch control valve 44.

Oil inside the housing 90 is stored inside a tank section 65 at the lower end of the housing 90. The lubricating oil pump 56 sends the oil inside the tank section 65 to the housing 90. The lubricating oil sent by the lubricating oil pump 56 is returned to the tank section 65 after lubricating the various gears, bearings and sliding parts inside the housing 90. The transmission pump 29 sends the oil to the filter 59. The filter 59 removes impurities inside the oil. Thereafter, the oil is cooled by the oil cooler 57, supplied to the transmission clutch 24a and the inside of the housing 90, and is used for the operations of the clutch 24a and for lubrication inside the housing 90.

[Lubrication structure (First embodiment)]

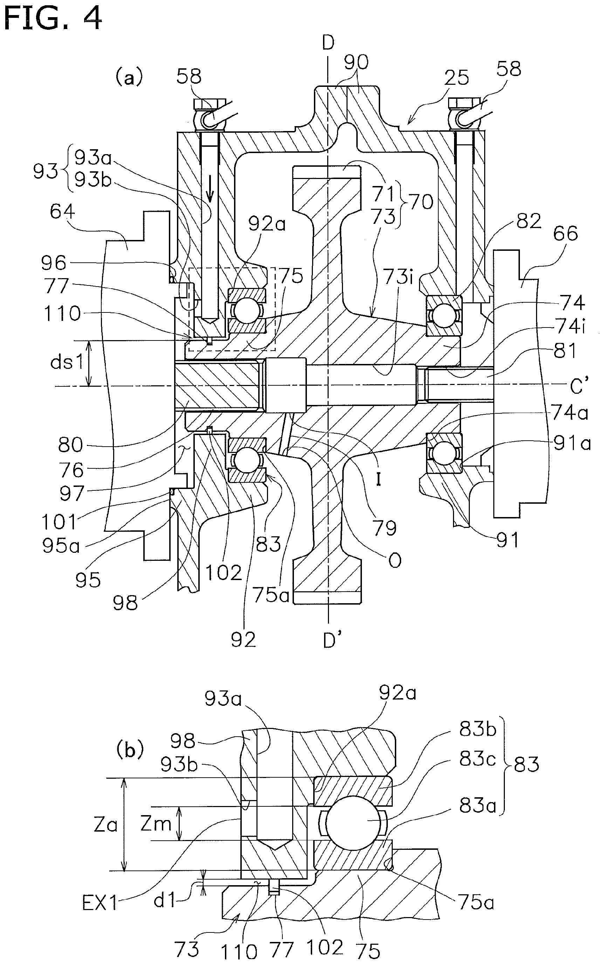

FIG. 4(a) and 4(b) are cross-sectional views of the lubrication structure of the power transmission device 25 according to the first embodiment. FIG. 4(b) is an enlargement of the portion outlined by the dotted line in FIG. 4(a). The illustrations of the drive gear 62 and the idler gear are omitted in FIG. 4(a). When referring to FIG. 4(a), the power transmission device 25 includes the PTO gear 70, a first bearing 82, a second bearing 83, and the housing 90.

The first external connection apparatus 64 includes the first drive shaft 80. The surface of the first drive shaft 80 is fabricated with teeth for fitting with the spline groove. That is, the first drive shaft 80 is a spline shaft. The second external connection apparatus 66 includes the second drive shaft 81. One end section of the PTO gear 70 is coupled to the first drive shaft 80 and the other end section is coupled to the second drive shaft 81. That is, the first external connection apparatus 64 and the second external connection apparatus 66 are also driven by the PTO gear 70. As a result, the first external connection apparatus 64 and the second external connection apparatus 66 are disposed on opposite sides of the housing 90 with the PTO gear 70 interposed therebetween. That is, the second external connection apparatus 66 is fixed to the side surface of the housing 90 that is on the opposite side of the side surface of the housing 90 to which the first external connection apparatus 64 is fixed. The rotational center axis of the first drive shaft 80 of the first external connection apparatus 64 and the rotational center axis of the second drive shaft 81 of the second external connection apparatus 66 are disposed coaxially with the rotational center axis of the PTO gear 70.

The PTO gear 70 includes a rotational force transmission section 71 and a boss section 73. The boss section 73 includes spline groove 76 on the internal circumferential surface at the side coupled with the first external connection apparatus 64. The spline groove 76 meshes with the first drive shaft 80. That is, the first drive shaft 80 is a spline shaft that is fitted with the spline groove 76 of the boss section 73. The boss section 73 further includes a first gear side bearing support section 74 and a second gear side bearing support section 75. The first gear side bearing support section 74 is supported by the first bearing 82. The second gear side bearing support section 75 is supported by the second bearing 83.

The first gear side bearing support section 74 includes a hole section 74i. A continuous hole 73i is provided between the hole section 74i and the spline groove 76. The second drive shaft 81 is inserted into the hole section 74i.

The second drive shaft 81 may be, for example, a spline shaft and may be fixed by fitting with a spline groove provided in the hole section 74i. Moreover, the second drive shaft 81 may be fixed to the hole section 74i with another fixing means such as a key or a screw and the like.

The housing 90 includes a first case side bearing support section 91 and a second case side bearing support section 92. The first bearing 82 is supported by the first case side bearing support section 91. The second bearing 83 is supported by the second case side bearing support section 92. Therefore, the PTO gear 70 is rotatably supported by the housing 90 via the first bearing 82 and the second bearing 83. The first bearing 82 and the second bearing 83 also rotatably support the boss section 73.

The rotational center axis of the PTO gear 70 is established by the line C-C'. In the following explanation, the explanations of direction are made based on the central axis C-C'. For example, the axial direction refers to the direction along the central axis C-C', and the radial direction is a direction perpendicular to the central axis C-C'. Therefore, the radial direction in FIG. 4(a) signifies the up-down direction in the drawing.

Furthermore, the axial outward direction is the direction from the axial center (illustrated by center axis D-D' in FIG. 4) of the PTO gear 70 toward the first external connection apparatus 64 or the second external connection apparatus 66. Furthermore, the axial inward direction is the direction from the first external connection apparatus 64 or the second external connection apparatus 66 toward the axial center D-D' of the PTO gear 70. Therefore, the phrase "the member A is positioned further to the axial outward side than the member B" signifies that the member A is further away from the axial center D-D' than the member B in the axial direction. In contrast, the phrase "the member A is positioned further to the axial inward side than the member B" signifies that the member A is closer to the axial center D-D' than the member B in the axial direction.

In the present embodiment, the term the "axial depth side" may be used as another meaning for the axial inward side. The axial depth side signifies the continuous hole 73i side between the hole section 74i and the spline groove 76.

The radial outward direction signifies the direction away from the central axis C-C' and the radial inward direction signifies the direction approaching the central axis C-C'. Therefore, the phrase "the member A is positioned further to the radial outward side than the member B" signifies that the member A is further away from the central axis C-C' than the member B. In contrast, the phrase "the member A is positioned further to the radial inward side than the member B" signifies that the member A is closer to the central axis C-C' than the member B.

The first gear side bearing support section 74 includes a first gear step section 74a that abuts the inner ring of the first bearing 82 and that restricts the first bearing 82 from moving in the axial inward direction. The first case side bearing support section 91 includes a first case step section 91a that abuts the outer ring of the first bearing 82 and restricts the first bearing 82 from moving in the axial outward direction. As illustrated in FIG. 4(b), the second gear side bearing support section 75 includes a second gear step section 75a that abuts an inner ring 83a of the second bearing 83 and that restricts the second bearing 83 from moving in the axial inward direction. The second case side bearing support section 92 includes a second case step section 92a that abuts an outer ring 83b of the second bearing 83 and that restricts the second bearing 83 from moving in the axial outward direction.

However as illustrated in FIG. 4(a), normally a very small gap is provided between the outer ring of the first bearing 82 and the first case step section 91a, or between the outer ring 83b of the second bearing 83 and the second case step section 92a in consideration of the dimensional tolerances and thermal expansion and the like of the parts when supporting with two deep groove ball bearings.

The rotational force transmission section 71 includes teeth for fitting with, for example, the drive gear 62 or the idler gear. The rotational force transmission section 71 is connected to the boss section 73. Specifically, the rotational force transmission section 71 is formed integrally with the boss section 73. The rotational force transmission section 71 extends in the radial outward direction from the boss section 73.

The housing 90 includes a protruding section 98 on the axial outward side of the second case side bearing support section 92. The protruding section 98 protrudes in the radial inward direction from the second case side bearing support section 92. As a result, as illustrated in FIG. 4(b), the protruding section 98 overlaps a region Zm (region between the outer periphery of the inner ring 83a and the inner periphery of the outer ring 83b) between the inner ring 83a and the outer ring 83b of the second bearing 83 as seen in the rotational axis C-C' direction of the second bearing 83. More specifically, the protruding section 98 overlaps a total region Za (region between the inner periphery of the inner ring 83a and the outer periphery of the outer ring 83b) of the second bearing 83 as seen in the rotational axis C-C' direction of the second bearing 83. A first gap 110 is provided between the protruding section 98 and the boss section 73.

The housing 90 includes an extending section 95 that extends from the protruding section 98 in the axial outward direction of the protruding section 98. The extending section 95 is a portion of the side wall of the housing 90. The housing 90 includes an attachment surface 95a for attaching the first external connection apparatus 64 to the axial direction outer end of the extending section 95. Moreover, the housing 90 includes an outer step section 96 formed on the axial direction outer end and the radial direction inner end of the extending section 95. The outer step section 96 is an indentation for inserting a belowmentioned O-ring 101. Screw holes (not illustrated) for fixing the external connection apparatuses are formed in the housing 90, and the first external connection apparatus 64 abuts the attachment surface 95a and is fixed to the housing 90 with a bolt (not illustrated). An oil sump section 97 is formed inside a region surrounded by the first external connection apparatus 64, the extending section 95, the protruding section 98, the boss section 73, and the first drive shaft 80. The oil sump section 97 retains lubricating oil for lubricating the fitting section of the spline groove 76 and the first drive shaft 80 (spline shaft). The oil sump section 97 is in communication with the fitting section of the first drive shaft 80 (spline shaft) and the spline groove 76.

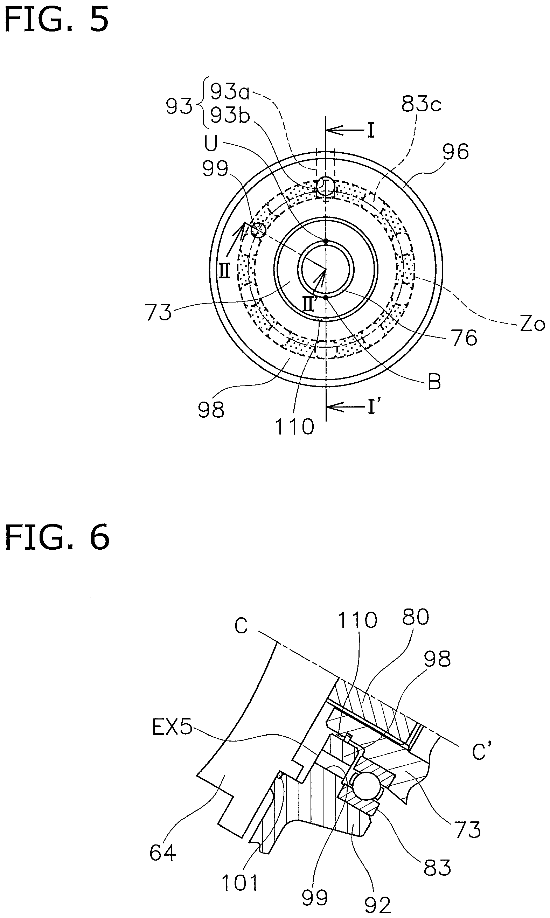

The housing 90 further includes an oil inlet path 93 for introducing the lubricating oil into the oil sump section 97. The oil inlet path 93 is connected to the pipe 58. Therefore, the lubricating oil is supplied to the oil inlet path 93 by the lubricating oil pump 56 or the transmission pump 29. FIG. 5 is a view of the housing 90 seen from the axial outward side according to the first embodiment. The illustration of the housing 90 further to the radial outward side than the outer step section 96 is omitted in FIG. 5. Moreover, FIG. 4(a) illustrates a cross-sectional plane cut along the cross-sectional plane I-I' depicted in FIG. 5 excluding the first external connection apparatus 64 and the second external connection apparatus 66.

When referring to FIG. 4(a) and FIG. 5, the oil inlet path 93 includes a first bottomed hole 93a and a second bottomed hole 93b. The first bottomed hole 93a extends downward from the upper surface of the housing 90. That is, the first bottomed hole 93a extends in the radial inward direction from the outer surface of the housing 90. The lower end of the first bottomed hole 93a is formed inside the protruding section 98. That is, the inner end of the first bottomed hole 93a is formed inside the protruding section 98. The second bottomed hole 93b is formed inside the protruding section 98. The second bottomed hole 93b extends from the inner end of the first bottomed hole 93a in the axial outward direction and reaches the oil sump section 97. Therefore, the lubricating oil is introduced into the oil sump section 97 by the oil inlet path 93. As illustrated in FIG. 4(b), at least a portion of the first gap 110 is positioned on the axial inward side of an oil discharge port EX1 of the oil inlet path 93.

The O-ring 101 is provided in the outer step section 96. The O-ring 101 seals the gap between the attachment surface 95a and the first external connection apparatus 64 that abuts the attachment surface 95a, and prevents lubricating oil from flowing to the outside.

In the embodiment illustrated in FIG. 4(a), a first seal 102 is provided in the first gap 110 in order to make the lubrication of the fitting section of the spline groove 76 and the first drive shaft 80 (spline shaft) more reliable. The first seal 102 is a seal ring, for example, but may be another type of seal as long as sealing can be achieved in the radial direction. As illustrated in FIG. 4(b), a first fixing groove 77 is provided in the boss section 73 so as to restrict the movement of the first seal 102 in the axial direction. That is, the boss section 73 includes the first fixing groove 77. The first seal 102 seals the first gap 110. Consequently, the lubricating oil retained in the oil sump section 97 is suppressed from flowing out through the first gap 110 and between rolling elements 83c of the second bearing 83.

A portion of the lubricating oil retained in the oil sump section 97 flows out of the oil sump section 97 from a backlash of the fitting section of the spline groove 76 and the first drive shaft 80 (spline shaft). Therefore, lubricating oil is desirably supplied from the oil inlet path 93 so that the amount per unit of time of the lubricating oil flowing out of the oil sump section 97 from the backlash of the spline fitting section is equal to or less than the amount per unit of time of the lubricating oil flowing into the oil sump section 97 from the oil inlet path 93.

Moreover, if the amount of the lubricating oil that leaks out from the first seal 102 cannot be ignored even if the first seal 102 is provided, the lubricating oil is desirably supplied from the oil inlet path 93 so that the total amount of the amount per unit of time of the lubricating oil leaking out from the first seal 102 and the amount per unit of time of the lubricating oil flowing out from the backlash of the spline fitting section, is equal to or less than the amount per unit of time of the lubricating oil flowing in from the oil inlet path 93.

The surface area S1 of the first gap 110 as seen from the axial direction is desirably smaller than the surface area Sb as seen from the axial direction of portions Zo that are open within the region Zm between the inner ring 83a and the outer ring 83b of the second bearing 83 as illustrated by the dot pattern in FIG. 5. Moreover, the surface area S1 of the first gap 110 is desirably smaller than a surface area SEX1 of the oil discharge port EX1 (illustrated as the second bottomed hole 93b in FIG. 5) of the oil inlet path 93.

Furthermore, the surface area SEX1 of the oil discharge port EX1 of the oil inlet path 93 is desirably greater than the sum (S1+Sbc) of the surface area S1 of the first gap 110 and the surface area Sbc of the backlash of the spline fitting section as seen from the axial direction (SEX1 > S1+Sbc). More specifically, when the surface areas of the portions covered in the lubricating oil retained inside the oil sump section 97 among the surface area S1 and the surface area Sbc are surface area S1' and surface area Sbc' respectively, the relationship SEX1 > S1'+Sbc' is desired.

When the first seal 102 is provided, the surface area of the gap that is the cause of the lubricating oil leakage and that is formed between the first seal 102 and the surrounding members thereof, is set as Sseal. Normally, as long as Sseal is extremely narrow and the leakage from the gap is small enough to be ignored, the relationship SEX1 > Sbc or SEX1 > Sbc' is sufficient. However, if the leakage from Sseal cannot be ignored, the relationship SEX1 > Sseal+Sbc is desirably established. More specifically, when the surface area of the portion covered in the lubricating oil of the Sseal is set as Sseal', the relationship SEX1 > Sseal'+Sbc' is desirably established.

In order to reduce the surface area S1 of the first gap 110, it is effective to reduce the distance d1 (d1 is set as the minimum gap distance of the first gap 110) illustrated in FIG. 4(b), and reduce the diameter ds1 illustrated in FIG. 4(a). When the first seal 102 is provided, reducing ds1 is effective in reducing the size of the first seal 102.

FIG. 6 illustrates a portion of the power transmission device 25 cut along the cross-sectional plane II-II' in FIG. 5. When referring to FIG. 5 and 6, the housing 90 further includes an oil drain path 99. The oil drain path 99 drains the lubricating oil retained in the oil sump section 97.

The lubricating oil is desirably supplied from the oil inlet path 93 so that the amount per unit of time of the lubricating oil flowing into the oil sump section 97 from the oil inlet path 93 is equal to or greater than the amount per unit of time of the lubricating oil flowing out of locations other than the oil drain path 99 of the oil sump section 97. The amount per unit of time of the lubricating oil flowing into the oil sump section 97 from the oil inlet path 93 is equal to the total oil amount of the amount per unit of time of the lubricating oil flowing out from the oil drain path 99 of the oil sump section 97 and the amount per unit of time of the lubricating oil flowing out from locations other than the oil drain path 99 of the oil sump section 97. The lubricating oil flowing out from locations other than the oil drain path 99 of the oil sump section 97 includes the amount per unit of time of the lubricating oil flowing out of the oil sump section 97 from the backlash of the spline fitting section and the lubricating oil leaking out from the first seal 102.

The oil drain path 99 is formed inside the protruding section 98. The oil drain path 99 extends in the axial direction and passes through the protruding section 98. At least a portion of the first gap 110 is positioned on the axial inward side of an oil drain port EX5 of the oil drain path 99.

When referring to FIG. 5, the oil drain path 99 is positioned higher than the lower end B of the spline groove 76. Moreover, the oil drain path 99 may be positioned higher than the upper end U of the spline groove 76. Therefore, the lubricating oil introduced into the oil sump section 97 is retained at least to the height of the lower end of the oil drain path 99, reliably lubricates at least a portion of the fitting section of the spline groove 76 and the first drive shaft 80 (spline shaft) by covering the portion in oil, and the excess lubricating oil is drained into the tank section 65 through the oil drain path 99.

As illustrated in FIG. 4(a), the boss section 73 includes an oil drain hole 79 that extends from a lubricating oil intake port I positioned on the internal circumferential surface further in the axial depth side than the spline groove 76, to a lubricating oil drainage port O positioned on the external circumferential surface of the boss section 73. As a result, the lubricating oil that passes through the gap (backlash of spline fitting section) between the spline groove 76 and the spline teeth of the first drive shaft 80 is recovered in the tank section 65. If the hole section 74i is opened without the second drive shaft 81 being attached to the hole section 74i, the oil drain hole 79 may be omitted.

Due to the above configuration, the fitting section of the spline groove 76 and the first drive shaft 80 (spline shaft) is reliably lubricated. Moreover, the lubricating oil that lubricates the spline fitting section of the spline groove 76 and the first drive shaft 80 circulates. Therefore, wear and damage to the spline fitting section, or more specifically, to the spline teeth surfaces, is prevented. Furthermore, because the lubricating oil is not retained in the spline fitting section, lubrication defects due to degraded lubricating oil are prevented.

[Lubrication structure (Second embodiment)]

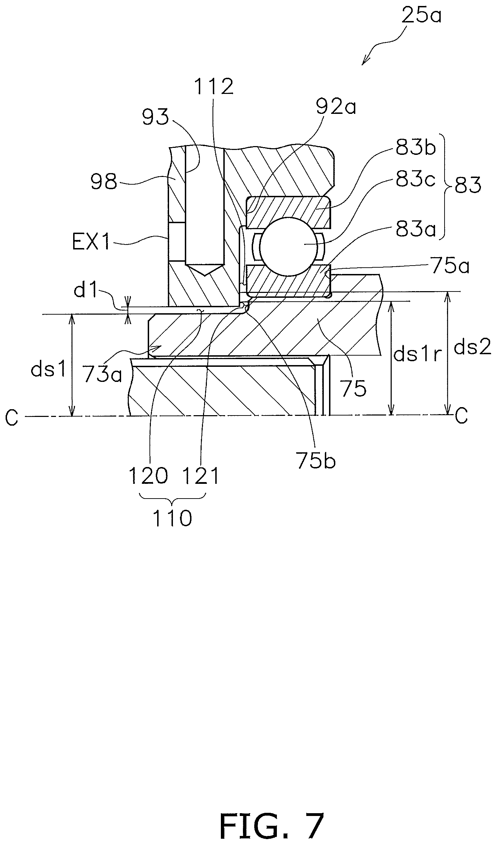

The second embodiment is a structure in which the first seal 102 is omitted from the first embodiment. Because other structures are the same those of the first embodiment, the present embodiment will be explained by disclosing only the structure corresponding to FIG. 4(b). FIG. 7 is a cross-sectional view of a lubrication structure of a power transmission device 25a according to the second embodiment. According to FIG. 7, a boss section 73a as in the second embodiment has the same structure as the boss section 73 as in the first embodiment except that the boss section 73a does not include the first fixing groove 77.

In the present embodiment, the first gap 110 includes a first sub-gap 120 that extends in the axial direction and a second sub-gap 121 that extends in the radial direction. In this case, the gap having the smallest surface area among the first sub-gap 120 that extends in the axial direction within the first gap 110, the second sub-gap 121 that extends in the radial direction within the first gap 110, and a second gap 112 that extends in the radial direction between the protruding section 98 and the inner ring 83a of the second bearing 83, mainly performs the role of suppressing the outflow of the lubricating oil retained in the oil sump section 97.

The surface areas of the second sub-gap 121 and the second gap 112 are derived as explained below. The surface area Sir of the second sub-gap 121 is derived as the minimum value of the surface area of the cylindrical surface sandwiched between the protruding section 98 and the boss section 73 along the distance ds1r (ds1r is any radius position between the inner radius of the protruding section 98 and the inner radius of the second bearing 83) in the radial direction from the center axis C-C'.

The surface area S2 of the second gap 112 is derived as the minimum value of the surface area of the cylindrical surface sandwiched between the protruding section 98 and the inner ring 83a of the second bearing 83 along a distance ds2 (ds2 is any radius position between the inner radius and the outer radius of the inner ring 83a of the second bearing 83) in the radial direction from the center axis C-C'.

When the surface area S1a of the first sub-gap 120 or the surface area Sir of the second sub-gap 121 is less than the surface area S2 of the second gap 112, the first gap 110 performs the role of suppressing the outflow of the lubricating oil retained in the oil sump section 97. If the lubricating oil flowing out from locations other than the oil drain path 99 of the oil sump section 97 include the lubricating oil flowing out from the first gap 110 and the lubricating oil flowing out from the backlash of the spline fitting section, the amount per unit of time of the lubricating oil flowing in from the oil inlet path 93 is desirably adjusted so that the amount per unit of time of the lubricating oil flowing out from the locations other than the oil drain path 99 is equal to or less than the amount per unit of time of the lubricating oil flowing in from the oil inlet path 93. Consequently, a sufficient amount of the lubricating oil, that is, an amount to reach the lower end of the oil drain path 99 can be retained in the oil sump section 97.

The surface area S1a of the first sub-gap 120 is derived according to (formula 1).

$$S1a = \pi \times \{(ds1+d1)^2 - (ds1)^2\} \quad ... \text{(formula 1)}$$

In this case as well, the surface area S1 of the first gap 110 that is the smallest surface area among the surface area S1a and the surface area Sir is desirably smaller than the surface area Sb as seen from the axial direction of the portions Zo that are open within the region Zm between the inner ring 83a and the outer ring 83b of the second bearing 83 as illustrated by the dot pattern in FIG. 5 in the same way as the first embodiment. Consequently, the first gap 110 suppresses the lubricating oil retained in the oil sump section 97 from flowing out between the rolling elements 83c of the second bearing 83.

Moreover, the surface area S1 of the first gap 110 is desirably smaller than the surface area SEX1 of the oil discharge port EX1 (illustrated as the second bottomed hole 93b in FIG. 5) of the oil inlet path 93. The sum (S1+Sbc) of the surface area S1 of the first gap 110 and the surface area Sbc of the backlash of the spline fitting section as seen from the axial direction is desirably less than the surface area SEX1 of the oil discharge port EX1 of the oil inlet path 93. More specifically, when the surface areas of the portions covered in the lubricating oil retained inside the oil sump section 97 among the surface area S1 and the surface area Sbc are set as surface area S1' and surface area Sbc' respectively, the relationship S1'+Sbc' < SEX1 is desired. As a result, it is easy to make the amount per unit of time of the lubricating oil flowing out from the first gap 110 equal to or less than the amount per unit of time of the lubricating oil flowing in from the oil inlet path 93.

Conversely, when S2 is less than S1a or Sir, the second gap 112 performs the role of suppressing the outflow of the lubricating oil retained in the oil sump section 97. At this time, at least a portion of the second gap 112 is positioned on the axial inward side of the oil discharge port EX1 of the oil inlet path 93 and of a drain port EX5 of the oil drain path 99. If the lubricating oil flowing out from locations other than the oil drain path 99 of the oil sump section 97 include the lubricating oil flowing out from the second gap 112 and the lubricating oil flowing out from the backlash of the spline fitting section, the amount per unit of time of the lubricating oil flowing in from the oil inlet path 93 is desirably adjusted so that the amount per unit of time of the lubricating oil flowing out from the locations other than the oil drain path 99 is equal to or less than the amount per unit of time of the lubricating oil flowing in from the oil inlet path 93.

In this case, the surface area S2 of the second gap 112 is desirably smaller than the abovementioned surface area Sb. Consequently, the second gap 112 suppresses the lubricating oil retained in the oil sump section 97 from flowing out between the rolling elements 83c of the second bearing 83.

The surface area S2 of the second gap 112 is desirably smaller than the abovementioned surface area SEX1. Moreover, the sum (S2+Sbc) of the surface area S2 of the second gap 112 and the surface area Sbc of the backlash of the spline fitting section as seen from the axial direction is desirably less than the surface area SEX1 of the oil discharge port EX1 of the oil inlet path 93 (S2+Sbc < SEX1). More specifically, when the surface areas of the portions covered in the lubricating oil retained inside the oil sump section 97 among the surface area S2 and the surface area Sbc are set as surface area S2' and surface area Sbc' respectively, the relationship S2'+Sbc' < SEX1 is desired. As a result, it is easy to make the amount per unit of time of the lubricating oil flowing out from the second gap 112 equal to or less than the amount per unit of time of the lubricating oil flowing in from the oil inlet path 93.

[Lubrication structure (Third embodiment)]

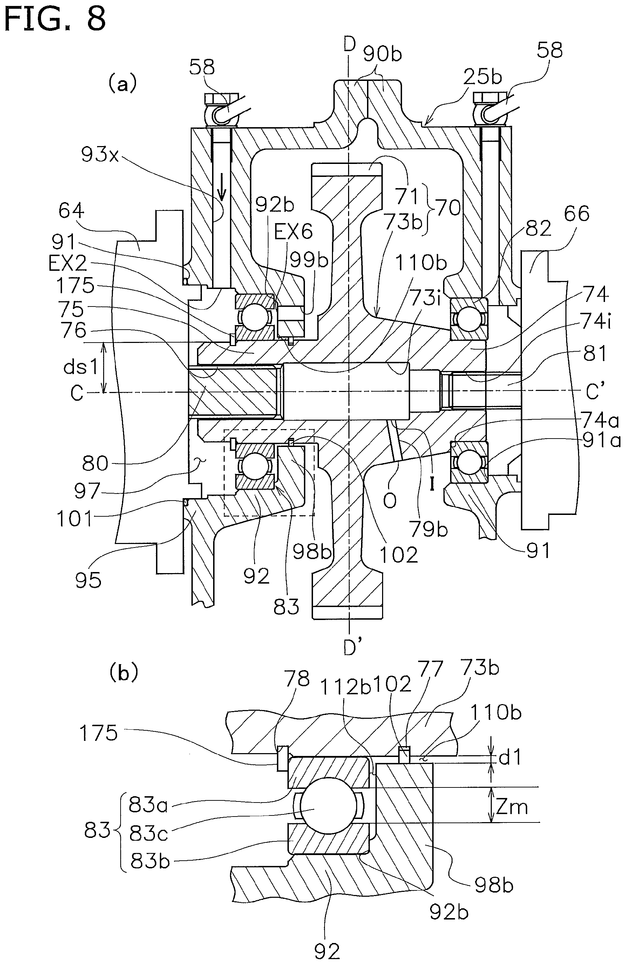

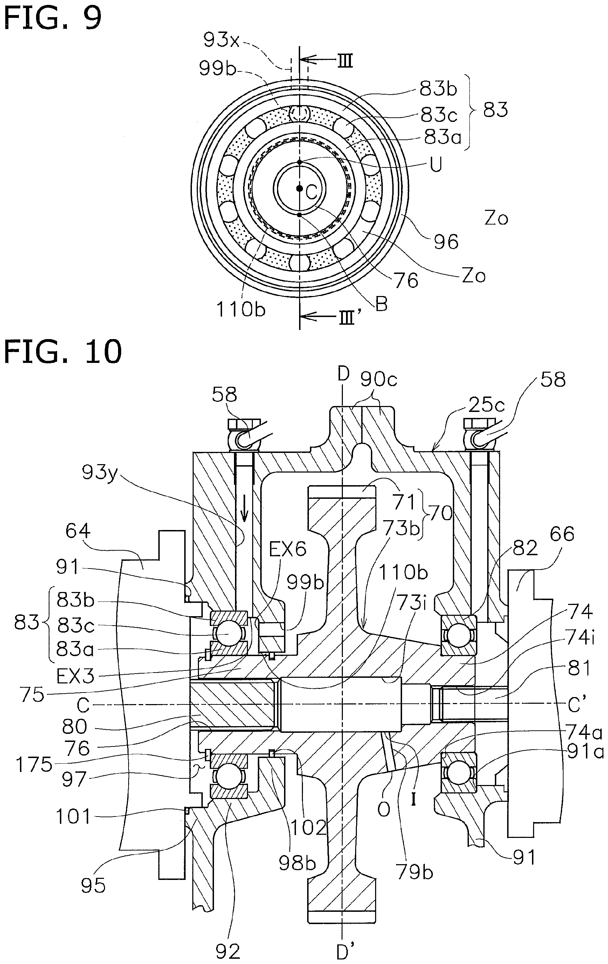

FIG. 8(a) and 8(b) are cross-sectional views of the lubrication structure of a power transmission device 25b according to the third embodiment. FIG. 8(b) is an enlargement of the portion outlined by the dotted line in FIG. 8(a). FIG. 9 is a view of a housing 90b seen from the axial outward side according to the third embodiment. Moreover, FIG. 8(a) illustrates a cross-sectional plane cut along the cross-sectional plane III-III' depicted in FIG. 9 excluding the first external connection apparatus 64 and the second external connection apparatus 66. In the third embodiment, the feature of providing a protruding section 98b further to the axial inward side than the second bearing 83 is the main difference with the first embodiment. Explanations of configurations having the same reference numeral as in the first embodiment are omitted in the third embodiment.

When referring to FIG. 8(a), the protruding section 98b is positioned further to the axial inward side than the second bearing 83. As a result, the second case side bearing support section 92 includes a third case step section 92b that abuts the outer ring 83b of the second bearing 83 and that restricts the second bearing 83 from moving in the axial inward direction. In place of the second gear step section 75a, a retainer ring 175 for restricting the second bearing 83 from moving in the axial outward direction is inserted into a boss section 73b according to the third embodiment. Therefore, the boss section 73b includes a second fixing groove 78 for inserting the retainer ring 175.

An oil inlet path 93x according to the third embodiment extends in the downward direction from the upper surface of the housing 90b and passes through the housing 90b. An oil discharge port EX2 of the oil inlet path 93x is positioned further to the axial outward side than the protruding section 98b. Therefore, at least a portion of a belowmentioned first gap 110b is positioned further to the axial inward side than the oil discharge port EX2.

When referring to FIG. 8(a), an oil drain path 99b extends in the axial direction and passes through the protruding section 98b. At least a portion of the first gap 110b is positioned on the axial inward side of a drain port EX6 of the oil drain path 99b. When referring to FIG. 9, the oil drain path 99b is positioned higher than the lower end B of the spline groove 76. Moreover, the oil drain path 99b may be positioned higher than the upper end U of the spline groove 76. The oil drain path 99b is disposed in a position so that the center of rotation C of the first drive shaft 80, the oil drain path 99b, and the oil inlet path 93x are aligned along a straight line as seen in the axial direction. However, the positional relationship of the oil drain path 99b and the oil inlet path 93x is not limited to this example.

When referring to FIG. 8(a), an oil drain hole 79b as in the third embodiment is provided at a position closer to the first gear side bearing support section 74 in comparison to the oil drain hole 79 according to the first embodiment. Specifically, the oil drain hole 79b is provided at a position closer to the first gear side bearing support section 74 than the axial center D-D' of the PTO gear 70 in the axial direction. In this case as well, the lubricating oil intake port I of the oil drain hole 79b is positioned on the internal circumferential surface further to the axial depth side than the spline groove 76. However, the positional relationship of the oil drain hole 79b and the axial center D-D' is not limited to this example.

When referring to FIG. 8(b), the first gap 110b is provided between the protruding section 98b and the boss section 73b, and a second gap 112b is provided between the protruding section 98b and the inner ring 83a of the second bearing 83. At least a portion of the second gap 112b is positioned on the axial inward side of an oil discharge port EX2 of the oil inlet path 93x. The protruding section 98b overlaps the region Zm between the inner ring 83a and the outer ring 83b of the second bearing 83 as seen in the rotational axis C-C' direction of the second bearing 83.

The power transmission device 25b includes the first seal 102 for sealing the first gap 110b. Consequently, the lubricating oil retained in the oil sump section 97 is suppressed from flowing between the rolling elements 83c of the second bearing 83 and flowing out from the first gap 110b.

The lubricating oil is desirably supplied from the oil inlet path 93x so that the amount per unit of time of the lubricating oil flowing out of the oil sump section 97 from the backlash of the spline fitting section is equal to or less than the amount per unit of time of the lubricating oil flowing into the oil sump section 97 from the oil inlet path 93x.

Moreover, if the amount of the lubricating oil that leaks out from the first seal 102 cannot be ignored even if the first seal 102 is provided, the lubricating oil is desirably supplied from the oil inlet path 93x so that the total amount of the amount per unit of time of the lubricating oil leaking out from the first seal 102 and the amount per unit of time of the lubricating oil flowing out from the backlash of the spline fitting section, is equal to or less than the amount per unit of time of the lubricating oil flowing in from the oil inlet path 93x.

Therefore, the lubricating oil is desirably supplied from the oil inlet path 93x so that the amount per unit of time of the lubricating oil flowing into the oil sump section 97 from the oil inlet path 93x is equal to or greater than the amount per unit of time of the lubricating oil flowing out of locations other than the oil drain path 99 of the oil sump section 97. The amount per unit of time of the lubricating oil flowing into the oil sump section 97 from the oil inlet path 93x is equal to the total oil amount of the amount per unit of time of the lubricating oil flowing out from the oil drain path 99 of the oil sump section 97 and the amount per unit of time of the lubricating oil flowing out from locations other than the oil drain path 99 of the oil sump section 97. The lubricating oil flowing out from locations other than the oil drain path 99 of the oil sump section 97 includes the amount per unit of time of the lubricating oil flowing out of the oil sump section 97 from the backlash of the spline fitting section and the lubricating oil leaking out from the first seal 102.

Further, the surface area Sb1 of the first gap 110b is desirably smaller than the surface area Sb of the opening portions Zo of the second bearing 83 illustrated in FIG. 9 by the dot patterns in the same way as the first embodiment. The surface area Sb1 of the first gap 110b is desirably smaller than the surface area SEX2 of the oil discharge port EX2 of the oil inlet path 93x.

Furthermore, the surface area SEX2 of the oil discharge port EX2 of the oil inlet path 93x is desirably greater than the sum (S1+Sbc) of the surface area Sib of the first gap 110b and the surface area Sbc of the backlash of the spline fitting section as seen from the axial direction (SEX2 > S1+Sbc). More specifically, when the surface areas of the portions covered in the lubricating oil retained inside the oil sump section 97 among the surface area Sib and the surface area Sbc are set as surface area Sib' and surface area Sbc' respectively, the relationship SEX2 > S1'+Sbc' is desired.

When the first seal 102 is provided, the surface area of the gap that is the cause of the lubricating oil leakage and that is formed between the first seal 102 and the surrounding members thereof, is set as Sseal. Normally, as long as Sseal is extremely narrow and the leakage from the gap is small enough to be ignored, the relationship SEX2 > Sbc or SEX2 > Sbc' is sufficient. However, if the leakage from Sseal cannot be ignored, the relationship SEX2 > Sseal+Sbc is desirably established. More specifically, when the surface area of the portion covered in the lubricating oil of the Sseal is set as Sseal', the relationship SEX2 > Sseal'+Sbc' is desirably established.

The first seal 102 may be omitted in the third embodiment in the same way as the in the second embodiment. If the lubricating oil flowing out from locations other than the oil drain path 99 of the oil sump section 97 includes the lubricating oil flowing out from the first gap 110b and the lubricating oil flowing out from the backlash of the spline fitting section to the outside of the oil sump section 97, the oil amount of the lubricating oil flowing in from the oil inlet path 93x is desirably adjusted so that the amount per unit of time of the lubricating oil flowing out from the locations other than the oil drain path 99 is equal to or less than the amount per unit of time of the lubricating oil flowing in from the oil inlet path 93x.

Moreover, the surface area Sib of the first gap 110b or the surface area S2b of the second gap 112b as seen in the radial direction may be designed as explained in the second embodiment. Consequently, the lubricating oil retained in the oil sump section 97 is suppressed from flowing between the rolling elements 83c of the second bearing 83 and flowing out from the first gap 110b.

[Lubrication structure (Fourth embodiment)]

FIG. 10 is a cross-sectional view of a lubrication structure of a power transmission device 25c according to a fourth embodiment. In the fourth embodiment, the feature of providing the oil inlet path 93x of the third embodiment further to the axial inward side than the second bearing 83 is the main difference with the third embodiment. Explanations of configurations having the same reference numeral as in the third embodiment are omitted in the fourth embodiment.

An oil inlet path 93y according to the fourth embodiment has a shape that is the same as the oil inlet path 93x according to the third embodiment. However, an oil discharge port EX3 is provided further to the axial inward side than the second bearing 83. However, the oil discharge port EX3 is positioned further to the axial outward side than the protruding section 98b. At least a portion of the first gap 110b is positioned further to the axial inward side than the oil discharge port EX3 and the drain port EX6 of the oil drain path 99b.

While a portion of the lubricating oil discharged from the oil discharge port EX3 is drained from the oil drain path 99b, the remaining lubricating oil flows between the rolling elements 83c of the second bearing 83 and reaches the oil sump section 97. Therefore, due to the above lubrication structure, at least a portion of the fitting section of the spline groove 76 and the spline teeth of the first drive shaft 80 is covered in oil and reliably lubricated. However in the present embodiment, the amount per unit of time of the lubricating oil flowing into the oil sump section 97 from the oil inlet path 93y is designed by taking into account the fact that a portion of the lubricating oil discharged from the oil discharge port EX3 flows out from the oil drain path 99b.

The surface area Sb1 of the first gap 110b is desirably made as small as possible. By reducing the outflow amount of the lubricating oil from the first gap 110b, the amount of the lubricating oil that flows between the rolling elements 83c of the second bearing 83 and reaches the oil sump section 97 can be increased. When the first seal 102 is provided, the gap that is the cause of the lubricating oil leakage and that is formed between the first seal 102 and the surrounding members thereof, is set as Sseal, and the Sseal is smaller than the Sb1 and the flow amount of the lubricating oil can be reduced further. As a result, the amount of the lubricating oil that flows between the rolling elements 83c of the second bearing 83 and reaches the oil sump section 97 can be further increased.

The lubricating oil is desirably supplied from the oil inlet path 93y so that the amount per unit of time of the lubricating oil flowing out of the oil sump section 97 from the backlash of the spline fitting section is equal to or less than the amount per unit of time of the lubricating oil flowing out of the oil inlet path 93y, between the rolling elements 83c of the second bearing 83, and into the oil sump section 97, in the same way as the first embodiment and the third embodiment. Moreover, if the amount of the lubricating oil that leaks out from the first seal 102 cannot be ignored even if the first seal 102 is provided, the lubricating oil is desirably supplied from the oil inlet path 93y so that the total amount of the amount per unit of time of the lubricating oil leaking out from the first seal 102 and the amount per unit of time of the lubricating oil flowing out from the backlash of the spline fitting section, is equal to or less than the amount per unit of time of the lubricating oil flowing in from the oil inlet path 93y, between the rolling elements 83c of the second bearing 83, and into the oil sump section 97.

Therefore, the lubricating oil is desirably supplied from the oil inlet path 93y so that the amount per unit of time of the lubricating oil flowing out from the oil inlet path 93y, between the rolling elements 83c of the second bearing 83, and into the oil sump section 97 is equal to or greater than the amount per unit of time of the lubricating oil flowing out from the locations other than the oil drain path 99b of the oil sump section 97. The amount per unit of time of the lubricating oil flowing from the oil inlet path 93y, between the rolling elements 83c of the second bearing 83, and into the oil sump section 97 is equal to the total amount of the amount per unit of time of the lubricating oil flowing out from the oil drain path 99b of the oil sump section 97 and the amount per unit of time of the lubricating oil flowing out from the locations other than the oil drain path 99b of the oil sump section 97. The lubricating oil flowing out from locations other than the oil drain path 99b of the oil sump section 97 includes the lubricating oil flowing out of the oil sump section 97 from the backlash of the spline fitting section and the lubricating oil leaking out from the first seal 102.

[Lubrication structure (Fifth embodiment)]

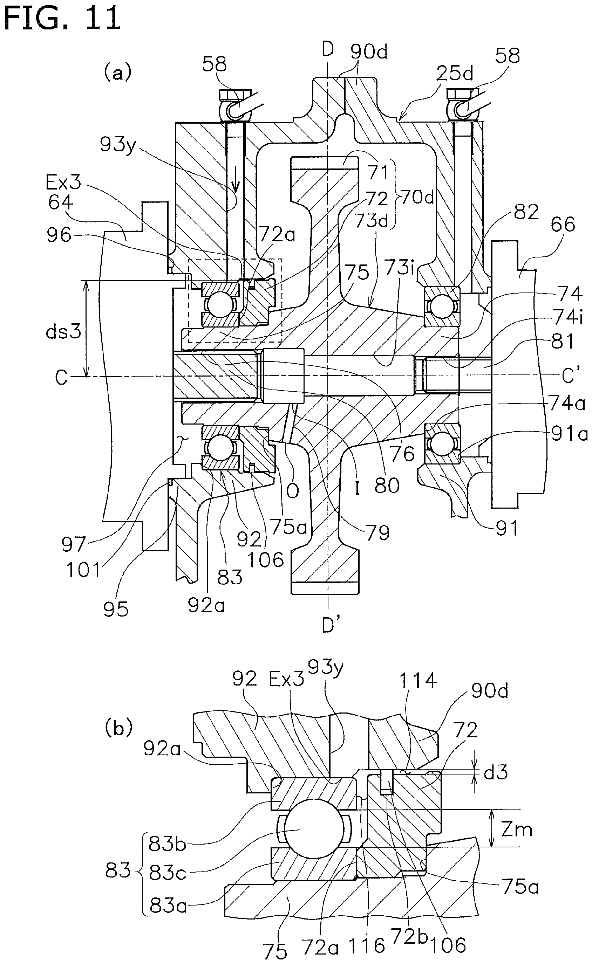

The fifth embodiment is a structure in which the protruding section is provided in the PTO gear 70 of the fourth embodiment. FIG. 11(a) and 11(b) are cross-sectional views of the lubrication structure of a power transmission device 25d according to the fifth embodiment. FIG. 11(b) is an enlargement of the portion outlined by the dotted line in FIG. 11(a). Because some of the structures in the fifth embodiment are the same structures as in the first embodiment and the fourth embodiment, such structures use the same reference numerals used in the first embodiment and the fourth embodiment. Explanations pertaining to structures that are the same as the first embodiment and the fourth embodiment are omitted.

A PTO gear 70d according to the fifth embodiment further includes a protruding section 72 in addition to the rotational force transmission section 71 and a boss section 73d. The protruding section 72 is a separate part from the rotational force transmission section 71 and the boss section 73d, and is, for example, fixed to the boss section 73d by press-fitting. Therefore, the protruding section 72 is provided on the boss section 73d. The boss section 73d includes the second gear step section 75a that restricts the protruding section 72 from moving in the axial inward direction. The boss section 73d is substantially the same as the boss section 73b of the fourth embodiment except for the feature of not including the first fixing groove 77 and the second fixing groove 78, and the feature of including the oil drain hole 79 of the first embodiment.

The protruding section 72 extends in the radial outward direction from the boss section 73d further to the axial inward side than the second bearing 83. When referring to FIG. 11(b), the protruding section 72 overlaps the region Zm between the inner ring 83a and the outer ring 83b of the second bearing 83 as seen in the rotational axis C-C' direction of the second bearing 83.

The protruding section 72 is spaced away from a housing 90d according to the fifth embodiment. A third gap 114 is provided between the protruding section 72 and the housing 90d. At least a portion of the third gap 114 is positioned on the axial inward side of the oil discharge port EX3. Moreover, the power transmission device 25d according to the present embodiment includes a third seal 106 inside the third gap 114 and further to the axial inward side than the oil discharge port EX3. The third seal 106 is a seal ring, for example, but may be another type of seal so long as sealing can be achieved in the radial direction. As illustrated in FIG. 11(b), a third fixing groove 72b is provided in the protruding section 72 so as to restrict the movement of the third seal 106 in the axial direction. That is, the protruding section 72 includes the third fixing groove 72b. The third seal 106 seals the third gap 114. Therefore, the lubricating oil introduced into the oil inlet path 93y and the lubricating oil retained in the oil sump section 97 are suppressed from flowing out from the third gap 114.

The lubricating oil is desirably supplied from the oil inlet path 93y so that the amount per unit of time of the lubricating oil flowing out of the oil sump section 97 from the backlash of the spline fitting section is equal to or less than the amount per unit of time of the lubricating oil flowing out of the oil inlet path 93y, between the rolling elements 83c of the second bearing 83, and into the oil sump section 97, in the same way as the first embodiment, the third embodiment, and the fourth embodiment. Moreover, if the amount of the lubricating oil that leaks out from the third seal 106 cannot be ignored even if the third seal 106 is provided, the lubricating oil is desirably supplied from the oil inlet path 93y so that the total amount of the amount per unit of time of the lubricating oil leaking out from the third seal 106 and the amount per unit of time of the lubricating oil flowing out from the backlash of the spline fitting section, is equal to or less than the amount per unit of time of the lubricating oil flowing in from the oil inlet path 93y, between the rolling elements 83c of the second bearing 83, and into the oil sump section 97.

A third gear step section 72a for restricting the movement of the second bearing 83 in the axial inward direction is provided at the outer end in the axial direction of the protruding section 72. Specifically, the protruding section 72 includes the third gear step section 72a. The protruding section 72 is in contact with only the inner ring 83a of the second bearing 83. The protruding section 72 is spaced away from the outer ring 83b of the second bearing 83. A fourth gap 116 is provided between the protruding section 72 and the outer ring 83b. The lubricating oil introduced from the oil inlet path 93y reaches the oil sump section 97 after passing through the fourth gap 116 and between the rolling elements 83c of the second bearing 83. The fourth gap 116 is desirably designed so that the inflow of the lubricating oil from the oil inlet path 93y is not hindered more than necessary.

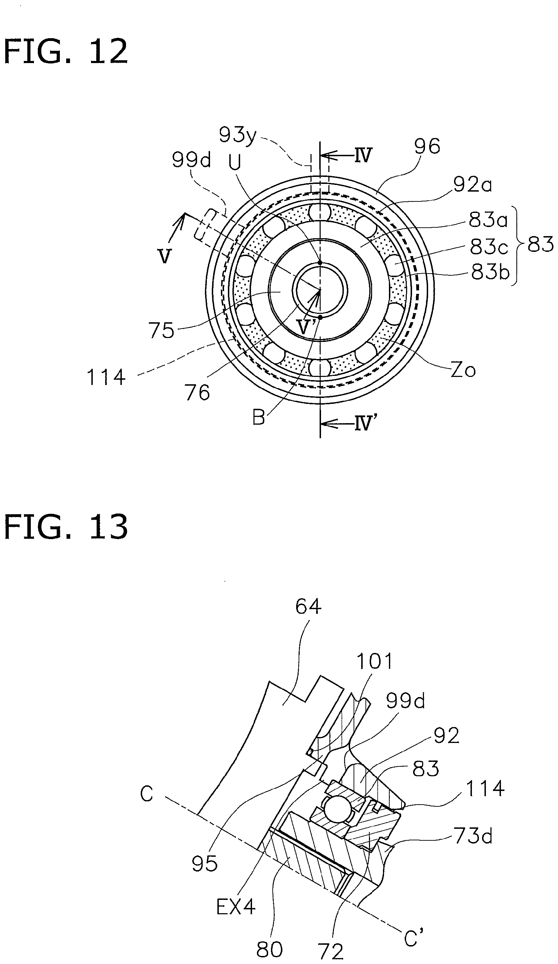

FIG. 12 is a view of the housing 90 seen from the axial outward side according to the fifth embodiment. The illustration of the housing 90 further to the radial outward side than the outer step section 96 is omitted in FIG. 12.

Moreover, FIG. 11(a) illustrates a cross-sectional plane cut along the cross-sectional plane IV-IV' in FIG. 12 excluding the first external connection apparatus 64 and the second external connection apparatus 66. FIG. 13 illustrates a portion of the power transmission device 25d cut along the cross-sectional plane V-V' in FIG. 12.

As illustrated in FIG. 12, the surface area S3 of the third gap 114 as seen from the axial direction is desirably smaller than the surface area Sb as seen from the axial direction of the portions Zo that are open within the region Zm between the inner ring 83a and the outer ring 83b of the second bearing 83 as illustrated by the dot pattern in FIG. 12.

Furthermore, the surface area SEX3 of the oil discharge port EX3 of the oil inlet path 93y is desirably greater than the sum (S3+Sbc) of the surface area S3 of the third gap 114 and the surface area Sbc of the backlash of the spline fitting section as seen from the axial direction (SEX3 > S3+Sbc). More specifically, when the surface areas of the portions covered in the lubricating oil retained inside the oil sump section 97 among the surface area S3 and the surface area Sbc are surface area S3' and surface area Sbc' respectively, the relationship SEX3 > S3'+Sbc' is desired.

The surface area S3 of the third gap 114 is desirably made as small as possible. By reducing the outflow amount of the lubricating oil from the third gap 114, the amount of the lubricating oil that flows between the rolling elements 83c of the second bearing 83 and reaches the oil sump section 97 can be increased. When the third seal 106 is provided, the gap that is the cause of the lubricating oil leakage and that is formed between the third seal 106 and the surrounding members thereof, is set as Sseal, and the Sseal is much smaller than the S3 and the flow amount of the lubricating oil can be reduced further. As a result, the amount of the lubricating oil that flows between the rolling elements 83c of the second bearing 83 and reaches the oil sump section 97 can be further increased.

When the third seal 106 is provided, the surface area of the gap that is the cause of the lubricating oil leakage and that is formed between the third seal 106 and the surrounding members thereof, is set as Sseal. Normally, as long as Sseal is extremely narrow and the leakage from the gap is small enough to be ignored, the relationship SEX3 > Sbc or SEX3 > Sbc' is sufficient for the surface area SEX3 of the oil discharge port EX3 of the oil inlet path 93y. However, if the leakage from Sseal cannot be ignored, the relationship SEX3 > Sseal+Sbc is desirably established. More specifically, when the surface area of the portion covered in the lubricating oil of the Sseal is set as Sseal', the relationship SEX3 > Sseal'+Sbc' is desirably established.

In order to reduce the surface area S3 of the third gap 114, it is effective to reduce the distance d3 (d3 is established as the minimum gap distance of the third gap 114) illustrated in FIG. 11(b), and reduce the diameter ds3 illustrated in FIG. 11(a). When the third seal 106 is provided, reducing ds3 is effective in reducing the size of the third seal 106.

When referring to FIG. 12 and FIG. 13, the housing 90d includes an oil drain path 99d in place of not including the protruding section 98b and the oil drain path 99b in the housing 90b according to the fourth embodiment. When referring to FIG. 12, the oil drain path 99d is positioned higher than the lower end B of the spline groove 76. Moreover, the oil drain path 99d may be positioned higher than the upper end U of the spline groove 76. Therefore, the lubricating oil introduced into the oil sump section 97 reliably lubricates at least a portion of the fitting section of the spline groove 76 and the first drive shaft 80 (spline shaft) by covering the portion in oil, and the excess lubricating oil is drained into the tank section 65 through the oil drain path 99d.

The lubricating oil is desirably supplied from the oil inlet path 93y so that the amount per unit of time of the lubricating oil flowing into the oil sump section 97 from the oil inlet path 93y is equal to or greater than the amount per unit of time of the lubricating oil flowing out of locations other than the oil drain path 99d of the oil sump section 97. The amount per unit of time of the lubricating oil flowing into the oil sump section 97 from the oil inlet path 93y is equal to the total oil amount of the amount per unit of time of the lubricating oil flowing out from the oil drain path 99d of the oil sump section 97 and the amount per unit of time of the lubricating oil flowing out from locations other than the oil drain path 99d of the oil sump section 97. The lubricating oil flowing out from locations other than the oil drain path 99d includes the lubricating oil flowing out of the oil sump section 97 from the backlash of the spline fitting section and the lubricating oil leaking out from the third seal 106.

When referring to FIG. 13, the oil drain path 99d is formed inside the extending section 95 and the second case side bearing support section 92. The oil drain path 99d extends in the radial outward direction from a drain port EX4 and passes through the housing 90d. The drain port EX4 is positioned further to the axial outward side than the second bearing 83 and further to the axial outward side than the protruding section 72. Therefore, at least a portion of the third gap 114 is positioned further to the axial inward side than the drain port EX4. The drain port EX4 is formed between the extending section 95 and the second case side bearing support section 92.

Due to the above configuration, the fitting section of the spline groove 76 and the first drive shaft 80 (spline shaft) is reliably lubricated. Moreover, the lubricating oil that lubricates the fitting section of the spline groove 76 and the first drive shaft 80 circulates.

The third seal 106 may be omitted in the fifth embodiment in the same way as in the second embodiment. In this case, if the lubricating oil flowing out from locations other than the oil drain path 99d of the oil sump section 97 includes the lubricating oil flowing out from the third gap 114 and the lubricating oil flowing out from the backlash of the spline fitting section to the outside of the oil sump section 97, the oil amount of the lubricating oil flowing in from the oil inlet path 93y is desirably adjusted so that the amount per unit of time of the lubricating oil flowing out from the locations other than the oil drain path 99d is equal to or less than the amount per unit of time of the lubricating oil flowing in from the oil inlet path 93y.

In this case, the surface area S3 of the third gap 114 is desirably smaller than the surface area Sb as seen from the axial direction of the opening portions Zo of the second bearing 83 in the same way as the second embodiment. As a result, the lubricating oil introduced from the oil inlet path 93y via the protruding section 72 and the lubricating oil retained in the oil sump section 97 is suppressed from flowing out from the third gap 114.

Moreover, the surface area S3 of the third gap 114 is desirably smaller than the surface area SEX3 of the oil discharge port EX3 of the oil inlet path 93y. The sum (S3+Sbc) of the surface area S3 of the third gap 114 and the surface area Sbc of the backlash of the spline fitting section as seen from the axial direction is desirably less than the surface area SEX3 of the oil discharge port EX3 of the oil inlet path 93y (S3+Sbc < SEX3). More specifically, when the surface areas of the portions covered in the lubricating oil retained inside the oil sump section 97 among the surface area S3 and the surface area Sbc are surface area S3' and surface area Sbc' respectively, the relationship S3'+Sbc' < SEX3 is desired. As a result, it is easy to make the amount per unit of time of the lubricating oil flowing out from the third gap 114 equal to or less than the amount per unit of time of the lubricating oil flowing in from the oil inlet path 93y.

[Lubrication structure (Sixth embodiment)]

The sixth embodiment is a structure in which the protruding section 72 of the fifth embodiment is provided further to the axial outward side than the second bearing 83. When the protruding section 72 is provided on the gear side and provided further to the axial outward side than the second bearing 83, it is required that the protruding section 72 or the rotational force transmission section 71 is made removable in order to attach the second bearing 83. The sixth embodiment illustrates an example in which the protruding section 72 is integrated with the boss section and the rotational force transmission section 71 can be removed from the boss section.

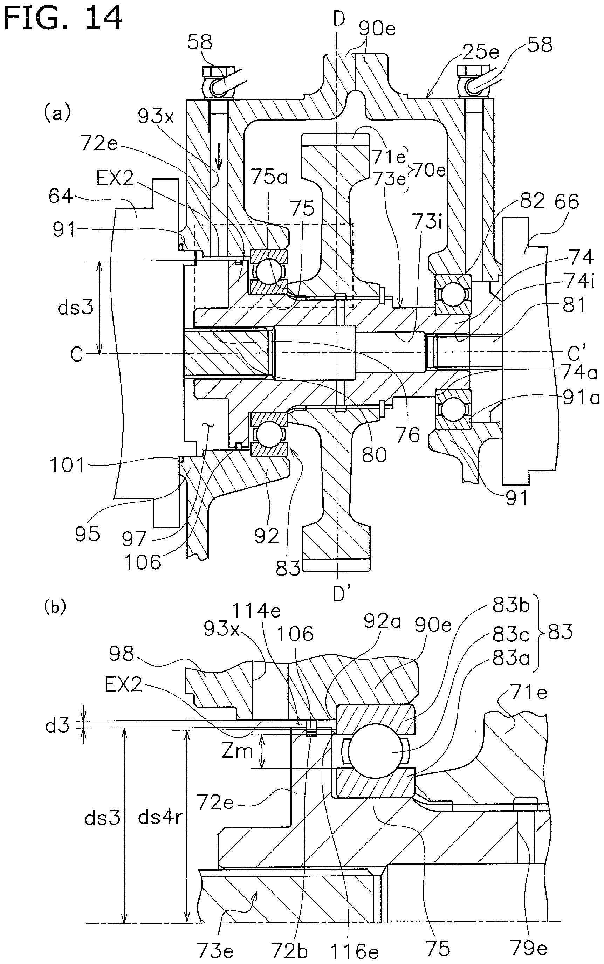

FIG. 14(a) and 4(b) are cross-sectional views of the lubrication structure of a power transmission device 25e according to the sixth embodiment. FIG. 14(b) is an enlargement of the portion outlined by the dotted line in FIG. 14(a). Because some of the structures in the sixth embodiment are the same structure as in the first embodiment, third embodiment and the fifth embodiment, such structures use the same reference numerals used in the first, third and fifth embodiments. Explanations pertaining to structures that are the same as the first, third and the fifth embodiments are omitted.

A PTO gear 70e according to the sixth embodiment includes a rotational force transmission section 71e and a boss section 73e. The rotational force transmission section 71e and the boss section 73e are separate parts and are coupled by a fixing means such as a spline fit. The boss section 73e includes a protruding section 72e. The protruding section 72e is formed integrally with the boss section 73e. The protruding section 72e protrudes in the radial outward direction from the second gear side bearing support section 75 on the axial outward side of the second bearing 83. The protruding section 72e overlaps the region Zm between the inner ring 83a and the outer ring 83b of the second bearing 83 as seen in the rotational axis C-C' direction of the second bearing 83.

A housing 90e according to the present embodiment is substantially different from the housing 90d according to the fifth embodiment only due to the position of the oil inlet path. The housing 90e includes the oil inlet path 93x according to the third embodiment. The oil inlet path 93x is positioned further to the axial outward side than the protruding section 72e. The protruding section 72e is spaced away from the housing 90e. A third gap 114e is provided between the protruding section 72e and the housing 90e. At least a portion of the third gap 114e is positioned further to the axial inward side than the oil discharge port EX2 of the oil inlet path 93x and the drain port EX4 of the oil drain path 99d.

The power transmission device 25e according to the present embodiment includes the third seal 106 provided in the third gap 114e. As illustrated in FIG. 14(b), the third fixing groove 72b is provided in the protruding section 72e so as to restrict the movement of the third seal 106 in the axial direction. The third seal 106 seals the third gap 114e. Therefore, the lubricating oil introduced from the oil inlet path 93x and the lubricating oil retained in the oil sump section 97 are suppressed from flowing out from the third gap 114e.

The lubricating oil is desirably supplied from the oil inlet path 93x so that the amount per unit of time of the lubricating oil flowing out of the oil sump section 97 from the backlash of the spline fitting section is equal to or less than the amount per unit of time of the lubricating oil flowing into the oil sump section 97 from the oil inlet path 93x in the present embodiment. Moreover, if the amount of the lubricating oil that leaks out from the third seal 106 cannot be ignored even if the third seal 106 is provided, the lubricating oil is desirably supplied from the oil inlet path 93x so that the total amount of the amount per unit of time of the lubricating oil leaking out from the third seal 106 and the amount per unit of time of the lubricating oil flowing out from the backlash of the spline fitting section, is equal to or less than the amount per unit of time of the lubricating oil flowing in from the oil inlet path 93x.

Therefore, the lubricating oil is desirably supplied from the oil inlet path 93x so that the amount per unit of time of the lubricating oil flowing into the oil sump section 97 from the oil inlet path 93x is equal to or greater than the amount per unit of time of the lubricating oil flowing out of locations other than the oil drain path 99d of the oil sump section 97. The amount per unit of time of the lubricating oil flowing into the oil sump section 97 from the oil inlet path 93x is equal to the total oil amount of the amount per unit of time of the lubricating oil flowing out from the oil drain path 99d of the oil sump section 97 and the amount per unit of time of the lubricating oil flowing out from locations other than the oil drain path 99d of the oil sump section 97. The lubricating oil flowing out from locations other than the oil drain path 99d of the oil sump section 97 includes the lubricating oil flowing out of the oil sump section 97 from the backlash of the spline fitting section and the lubricating oil leaking out from the third seal 106.

In the present embodiment, the surface area S3e of the third gap 114e is desirably smaller than the surface area Sb as seen from the axial direction of the opening portions Zo of the second bearing 83. The surface area S3e of the third gap 114e is desirably smaller than the surface area SEX2 of the oil discharge port EX2 of the oil inlet path 93x. The sum (S3e+Sbc) of the surface area S3e of the third gap 114e and the surface area Sbc of the backlash of the spline fitting section as seen from the axial direction is desirably less than the surface area SEX2 of the oil discharge port EX2 of the oil inlet path 93x (S3e+Sbc < SEX2). More specifically, when the surface areas of the portions covered in the lubricating oil retained inside the oil sump section 97 among the surface area S3e and the surface area Sbc are surface area S3e' and surface area Sbc' respectively, the relationship S3e'+Sbc' < SEX2 is desired.

The surface area S3e of the third gap 114e is derived according to (formula 2).

$$S3e = п \times \{(ds3+d3)^2 - (ds3)^2\} \quad ... \text{(formula 2)}$$

When the third seal 106 is provided, the surface area of the gap that is the cause of the lubricating oil leakage and that is formed between the third seal 106 and the surrounding members thereof, is set as Sseal. Normally, as long as Sseal is extremely narrow and the leakage from the gap is small enough to be ignored, the relationship SEX2 > Sbc or SEX2 > Sbc' is sufficient. However, if the leakage from Sseal cannot be ignored, the relationship SEX2 > Sseal+Sbc is desirably established. More specifically, when the surface area of the portion covered in the lubricating oil of the Sseal is set as Sseal', the relationship SEX2 > Sseal'+Sbc' is desirably established.

Due to the above configuration, the fitting section of the spline groove 76 and the first drive shaft 80 (spline shaft) is reliably lubricated. Moreover, the lubricating oil that lubricates the fitting section of the spline groove 76 and the first drive shaft 80 circulates.

The third seal 106 may be omitted in the sixth embodiment in the same way as in the second embodiment. In this case, if the surface area S3e of the third gap 114e that extends in the axial direction is less than the surface S4e of a fourth gap 116e that extends in the radial direction between the protruding section 98 and the outer ring 83b of the second bearing 83, the third gap 114e performs the role of suppressing the outflow of the lubricating oil retained in the oil sump section 97. The surface area S4e can be calculated in the same way as the surface area S2 of the second gap 112 in the second embodiment. That is, the surface area S4e is derived as the minimum value of the surface area of the cylindrical surface sandwiched between the protruding section 72e and the outer ring 83b of the second bearing 83 along the distance ds4r (ds4r is any radial position between the outer radius of the protruding section 72e and the inner radius of the outer ring 83b of the second bearing 83) in the radial direction from the center axis C-C'.

At this time, if the lubricating oil flowing out from locations other than the oil drain path 99d of the oil sump section 97 includes the lubricating oil flowing out from the third gap 114 and the lubricating oil flowing out from the backlash of the spline fitting section to the outside of the oil sump section 97, the oil amount of the lubricating oil flowing in from the oil inlet path 93x is desirably adjusted so that the amount per unit of time of the lubricating oil flowing out from the locations other than the oil drain path 99d is equal to or less than the amount per unit of time of the lubricating oil flowing in from the oil inlet path 93x.

In this case, the surface area S3e of the third gap 114e is desirably smaller than the surface area Sb as seen from the axial direction of the opening portions Zo of the second bearing 83. As a result, the lubricating oil introduced from the oil inlet path 93x and the lubricating oil retained in the oil sump section 97 are suppressed from flowing out from the third gap 114e.

The surface area S3e of the third gap 114e is desirably smaller than the surface area SEX2 of the oil discharge port EX2 of the oil inlet path 93x. The sum (S3e+Sbc) of the surface area S3e of the third gap 114e and the surface area Sbc of the backlash of the spline fitting section as seen from the axial direction is desirably less than the surface area SEX2 of the oil discharge port EX2 of the oil inlet path 93x (S3e+Sbc < SEX2). More specifically, when the surface areas of the portions covered in the lubricating oil retained inside the oil sump section 97 among the surface area S3e and the surface area Sbc are surface area S3e' and surface area Sbc' respectively, the relationship S3e'+Sbc' < SEX2 is desired. As a result, it is easy to make the amount per unit of time of the lubricating oil flowing out from the third gap 114e equal to or less than the amount per unit of time of the lubricating oil flowing in from the oil inlet path 93x.

Conversely, if the surface area S4e of the fourth gap 116e is less than the surface area S3e of the third gap 114e, the fourth gap 116e performs the role of suppressing the outflow of the lubricating oil introduced from the oil inlet path 93x and the lubricating oil retained in the oil sump section 97. At least a portion of the fourth gap 116e is positioned further to the axial inward side than the oil discharge port EX2 of the oil inlet path 93x and the drain port EX4 of the oil drain path 99d. At this time, if the lubricating oil flowing out from locations other than the oil drain path 99d of the oil sump section 97 includes the lubricating oil flowing out from the fourth gap 116e and the lubricating oil flowing out from the backlash of the spline fitting section to the outside of the oil sump section 97, the oil amount of the lubricating oil flowing in from the oil inlet path 93x is desirably adjusted so that the total of the amount per unit of time of the lubricating oil flowing out from the locations other than the oil drain path 99d is equal to or less than the amount per unit of time of the lubricating oil flowing in from the oil inlet path 93x.

In this case, the surface area S4 of the fourth gap 116e is desirably smaller than the surface area Sb as seen from the axial direction of the opening portions Zo of the second bearing 83. As a result, the lubricating oil introduced from the oil inlet path 93x via the protruding section 72 and the lubricating oil retained in the oil sump section 97 are suppressed from flowing out from the fourth gap 116e.

Moreover, the surface area S4 of the fourth gap 116e is desirably smaller than the surface area SEX2 of the oil discharge port EX2 of the oil inlet path 93x. The sum (S4+Sbc) of the surface area S4 of the fourth gap 116e and the surface area Sbc of the backlash of the spline fitting section as seen from the axial direction is desirably less than the surface area SEX2 of the oil discharge port EX2 of the oil inlet path 93x (S4+Sbc < SEX2). More specifically, when the surface areas of the portions covered in the lubricating oil retained inside the oil sump section 97 among the surface area S4 and the surface area Sbc are surface area S4' and surface area Sbc' respectively, the relationship S4'+Sbc' < SEX2 is desired. As a result, it is easy to make the amount per unit of time of the lubricating oil flowing out from the fourth gap 116e equal to or less than the amount per unit of time of the lubricating oil flowing in from the oil inlet path 93x.

(Characteristics)

The abovementioned power transmission devices 25 and 25a to 25e have the following characteristics.

(1) The power transmission devices 25, 25a to 25e include the oil sump section 97 that is in communication with the spline fitting section of the spline groove 76 and the first drive shaft 80, the oil inlet paths 93, 9x, 93y for introducing lubricating oil into the oil sump section 97, and the oil drain paths 99, 99b, 99d for draining the lubricating oil retained in the oil sump section 97. The oil drain paths 99, 99b, 99d are positioned higher than the lower end B of the spline groove 76 of the boss sections 73, 73b, 73d, 73e.
In these power transmission devices, the lower end of the spline groove 76, namely, at least a portion of a spline fitting section is reliably covered by the lubricating oil and reliably lubricated. Moreover, when the lubricating oil is retained up to the height of the oil drain paths 99, 99b, 99d in the oil sump section 97, excess lubricating oil is drained by passing through the oil drain paths 99, 99b, 99d and the lubricating oil circulates. Therefore, lubrication defects can be suppressed even when the lubrication oil is used for a long time. Therefore, wear and damage to the spline fitting section, or more specifically, wear and damage to the spline teeth surfaces, is prevented.
(2) The protruding sections 98, 98b, 72, 72e are positioned on the axial inward side of the oil sump section 97. The protruding sections 98, 98b, 72, 72e overlap the region Zm between the inner ring 83a and the outer ring 83b as seen in the rotational axis C-C' direction of the second bearing 83. Consequently, the lubricating oil retained in the oil sump section 97 is suppressed from flowing out between the rolling elements 83c of the second bearing 83.
(3) The oil drain paths 99, 99b, 99d are positioned higher than the upper end U of the spline groove 76. Consequently, all of the spline fitting section can be covered reliably by the lubricating oil.
(4) The boss sections 73, 73b, 73d, 73e include the oil drain holes 79, 79b, 79e that extend from the lubricating oil intake port I positioned further to the axial depth side than the spline groove 76, to the lubricating oil drainage port O positioned on the external circumferential surface of the boss sections 73, 73b, 73d, 73e. Consequently, even if the hole section 74i is covered by the second drive shaft 81, the lubricating oil that covers the spline fitting section flows through the backlash of the spline fitting section and drains out from the oil drain holes 79, 79b, 79e. Therefore, the lubricating oil is not retained in the spline fitting section and circulates. As a result, lubrication defects can be further suppressed.
(5) At least a portion of each of the first to fourth gaps is positioned further to the axial inward side than the oil discharge ports EX1 to EX3 of the oil inlet paths 93, 93x, 93y and the drain ports EX4 to EX6 of the oil drain paths 99, 99b, 99d. As a result, the lubricating oil introduced from the oil inlet paths 93, 93x, 93y is suppressed from flowing to locations other than the oil sump section 97.
(6) When the protruding sections 98 and 98b are provided in the housing 90, 90b, or 90c, the amount of oil per unit of time of the lubricating oil flowing out from locations other than the oil drain paths 99, 99b of the oil sump section 97 is equal to or less than the amount per unit of time of the lubricating oil flowing in from the oil inlet paths 93, 93x, 93y. More specifically, the total of the amount per unit of time of the lubricating oil flowing out from the first gaps 110, 110b or the second gaps 112, 112b and the amount per unit of time of the lubricating oil flowing out from the backlash of the spline fitting section is equal to or less than the amount per unit of time of the lubricating oil flowing in from the oil inlet paths 93, 93x, 93y. Consequently, the lubricating oil can be reliably retained in the oil sump section 97 up to the level where the oil drain paths 99, 99b are provided.

(7) The power transmission devices 25, 25b, 25c further include the first seal 102 for sealing the first gaps 110, 110b in the case of characteristic (6). As a result, the lubricating oil retained in the oil sump section 97 can be further suppressed from flowing out from the first gaps 110, 110b.

(8) When the protruding sections 72, 72e are provided in the boss sections 73d, 73e, the amount per unit of time of the lubricating oil flowing out from locations other than the oil drain path 99d of the oil sump section 97 is equal to or less than the amount per unit of time of the lubricating oil flowing in from the oil inlet path 93x, 93y. More specifically, the total of the amount per unit of time of the lubricating oil flowing out from the third gaps 114, 114e or the fourth gap 116e and the amount per unit of time of the lubricating oil flowing out from the backlash of the spline fitting section is equal to or less than the amount per unit of time of the lubricating oil flowing in from the oil inlet paths 93x, 93y. Consequently, the lubricating oil can be reliably retained in the oil sump section 97 up to the level where the oil drain path 99d is provided.

(9) The power transmission devices 25d, 25e further include the third seal 106 for sealing the third gaps 114, 114e in the case of characteristic (8). As a result, the lubricating oil retained in the oil sump section 97 can be further suppressed from flowing out from the third gaps 114, 114e.

(Modified examples)

The present invention is not limited to the above embodiment and various changes and modifications may be made without departing from the spirit of the invention.

(a) While the work vehicle 1 is exemplified as a wheel loader in the above embodiments, the power transmission device according to the above embodiments can be widely applied to another construction machine such as a hydraulic excavator, a bulldozer, a dump truck, or a motor grader and the like or another work vehicle other than the wheel loader.

(b) While an example of lubricating a spline structure of the inside of the PTO gear is described in the above embodiments, the same lubrication structure may be applied to a portion coupling another pump or motor inside the power transmission device 25. For example, the first external connection apparatus 64 and the second external connection apparatus 66 may be hydraulic motors. Furthermore, the first external connection apparatus 64 and the second external connection apparatus 66 may be electric motors or generators. Moreover, the lubrication structure may be applied to another spline fitting section inside the power transmission device 25. That is, the lubrication structure of the above embodiments may be applied to a spline fitting section other than the portion coupling the external connection apparatuses.

(c) While an example is described in which the rotational force transmission sections 71, 71e are each the tooth of a gear in the above embodiments, the rotational force transmission sections 71, 71e may be formed by another rotational force transmission mechanism such as a sprocket fitted to a chain or a pulley having a belt wound thereto.

(d) While an example is described in which the spline fitting section in which the spline shaft (first drive shaft 80) and the spline groove 76 are fitted together in the above embodiments, the spline fitting section may be lubricated by splash lubrication. In this case, the oil inlet paths 93, 93x, 93y are provided above the oil sump section 97 and a receiving port for receiving the lubricating oil splashed up by the drive gear 62, PTO gear 70, and the like is provided on at least a portion of the oil inlet paths 93, 93x, 93y.

(e) The third gaps 114, 114e in the fifth and sixth embodiments may each include a sub-gap that extends the axial direction and a sub-gap that extends in the radial direction in the same way as the second embodiment. The size of the gaps may be determined so that the outflow of the lubricating oil in the gap with the smaller surface area among the sub-gaps is suppressed.

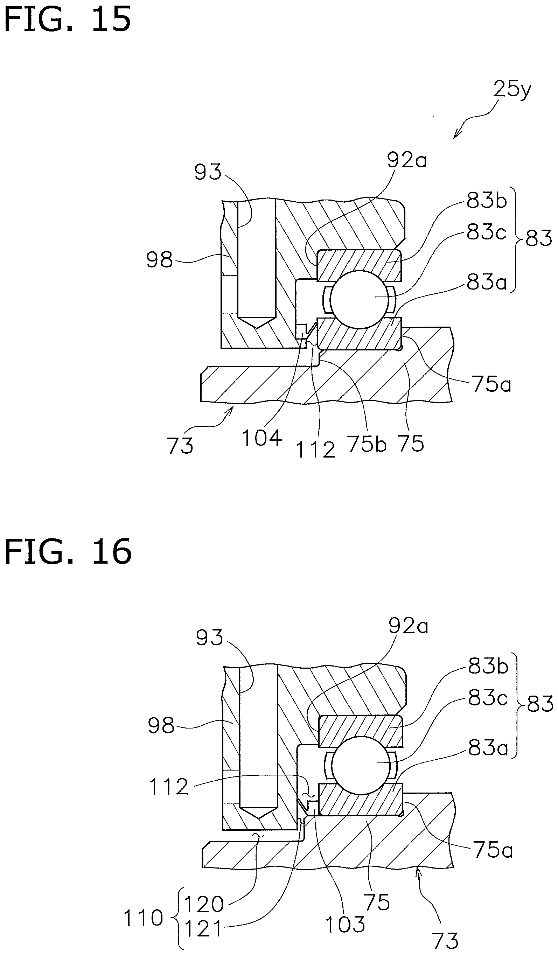

(f) Instead of providing the first seal 102 in each of the first gaps 110, 110b as in the first, third and fourth embodiments, a seal may be provided in each of the second gaps 112, 112b. FIG. 15 illustrates a first modified example in which a seal is provided in the second gap 112 in the second embodiment. A second seal 104 for sealing the second gap 112 is provided in place of the first seal 102 in the first modified example. That is, a power transmission device 25y according to the present modified example includes the second seal 104. While a V-shaped end surface seal is depicted as the second seal 104 in FIG. 15, any type of seal may be used so long as sealing in the axial direction is achieved. The second seal 104 is disposed on the axial inward side surface of the protruding section 98. While the second seal 104 abuts the end surface of the inner ring 83a of the second bearing 83 in FIG. 15, the second seal 104 may abut the end surface of a fourth gear step section 75b of the second gear side bearing support section 75. The same effect achieved by providing the first seal 102 is achieved in the present modified example.

Furthermore, a seal may be provided on the gear side on the opposite side in a second modified example. FIG. 16 illustrates the second modified example in which a first seal 103 for sealing the second sub-gap 121 is provided on the gear side in the second modified example. While a V-shaped end surface seal is depicted as the first seal 103 in FIG. 16, any type of seal may be used as long as sealing in the axial direction is achieved. The first seal 103 is disposed on the axial outward side of the second bearing 83. The same effect achieved by providing the first seal 102 of the first embodiment is achieved in the present modified example.

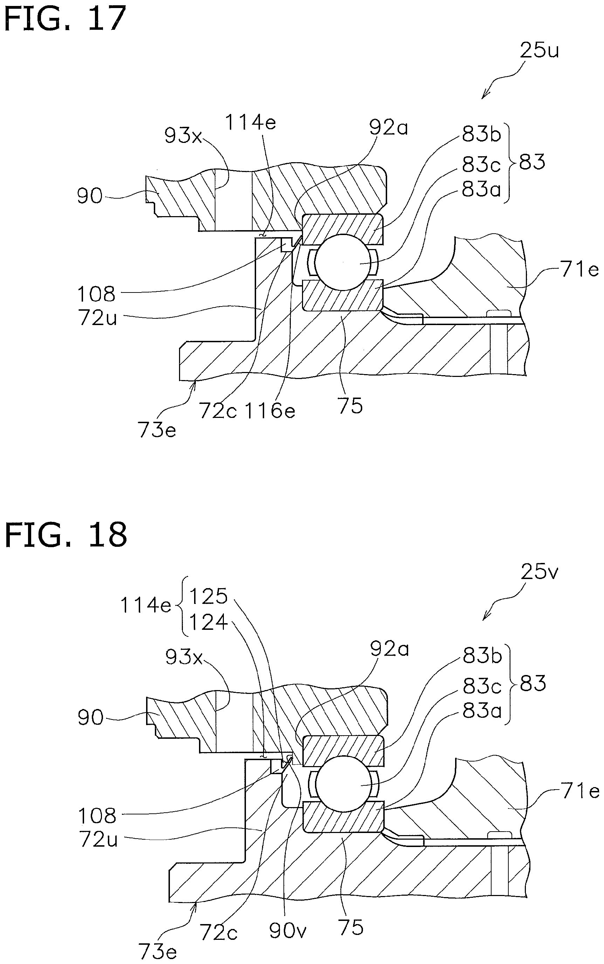

The same configuration as the first modified example may be the same for the fifth and sixth embodiments. That is, a fourth seal that is the same as the second seal may be provided in the fourth gaps 116, 116e. FIG. 17 illustrates a third modified example in which a seal is provided in the fourth gap 116e in the sixth embodiment. A fourth seal 108 for sealing the fourth gap 116e may be provided in place of the third seal 106 in the third modified example. That is, a power transmission device 25u according to the present modified example includes the fourth seal 108. While a V-shaped end surface seal is depicted as the fourth seal 108 in FIG. 17, any type of seal may be used so long as sealing in the axial direction is achieved. The fourth seal 108 is disposed in a fourth fixing groove 72c provided on the axial inward side surface of a protruding section 72u. The same effect can be achieved in the present modified example as when the third seal 106 is provided.

While the fourth seal 108 abuts the end surface of the outer ring 83b of the second bearing 83 in FIG. 17, the fourth seal 108 may abut the end surface of the housing 90. FIG. 18 illustrates a fourth modified example in which the fourth seal 108 abuts the end surface of the housing 90. In a power transmission device 25v according to the present modified example, the third gap 114e includes a third sub-gap 124 that extends in the axial direction and a fourth sub-gap 125 that extends in the radial direction. In the present modified example, the fourth sub-gap 125 is provided between the fourth seal 108 and an end surface 90v of the housing 90. The fourth seal 108 seals the fourth sub-gap 125. The same effect can be achieved in the present modified example as when the third seal 106 is provided.

(g) While examples in which the protruding sections 98, 98b are formed integrally with another portion of the housings 90 to 90c are described in the first to fourth embodiments, the protruding sections 98, 98b may be separate parts. In this case, the protruding sections 98, 98b may be fixed by press-fitting to the housings 90 to 90c. Alternatively, the protruding sections 98, 98b may be fixed to the housings 90 to 90c by another fixing method such as a bolt and nut and the like.

The protruding section 72 may be formed integrally with the boss section 73d in the fifth embodiment. In this case, an oil drain hole may be provided in the boss section 73d according to the fifth embodiment at the position of the oil drain hole 79b according to the third embodiment. Moreover, the protruding section 72e of the sixth embodiment may be formed as a separate part from the boss section 73e, and the protruding section 72e may be fixed by press-fitting to the boss section 73e. In this case, the rotational force transmission section 71e and the boss section 73e may be formed integrally. When the protruding section and the boss section are separate parts in the fourth and fifth embodiments, the protruding section may be fixed to the boss section with a fixing method other than press-fitting.

(h) An oil drain path may be provided in the same position as the oil drain path 99 of the first and second embodiments in place of the oil drain path 99b in the third and fourth embodiments. Moreover, the oil drain path 99d may be provided in place of the oil drain paths 99, 99b in the first to fourth embodiments. The shapes of the oil drain holes 79, 79b, 79e are optional and the positions thereof are similarly not limited to the positions of the above embodiments as long as the position is further to the axial inward side than the spline groove 76.

(i) The first bearing 82, the first gear side bearing support section 74, and the first case side bearing support section 91 may be omitted in the above embodiments. Similarly, the second bearing 83, the second gear side bearing support section 75, and the second case side bearing support section 92 may be omitted in the above embodiments. However in this case, the use of a double-row angular bearing as the support bearing for the PTO gear, or the use of back-to-back tapered roller bearings is required for sufficiently taking into account the support structure for the PTO gear.

(j) The positional relationship of the rotational force transmission sections 71, 71e and the boss section 73 is not limited to the above examples. The rotational force transmission sections 71, 71e may be formed at a position shifted away from the axial center of the boss section 73. The rotational force transmission section 71 may also be formed on the surface of the boss section 73.

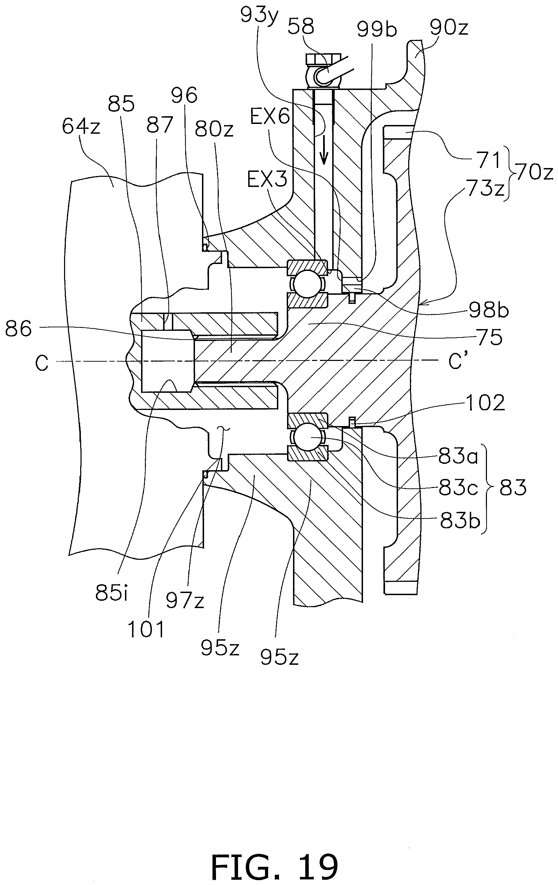

(k) While the first external connection apparatus 64 and the second external connection apparatus 66 in the above embodiments are respectively described as configurations including the first drive shaft 80 and the second drive shaft 81, the first external connection apparatus 64 and the second external connection apparatus 66 may include the boss section and the rotational force transmission sections 71, 71e may be coupled to a spline shaft that fits with the boss section. FIG. 19 illustrates a fifth modified example in which the first external connection apparatus 64 includes a boss section. The fifth modified example is an example in which a portion of the fourth embodiment is modified. The same reference numerals are attached to the configurations that are the same as the fourth embodiment in FIG. 19, and explanations of such configurations are omitted. A break line is used in FIG. 19 to illustrate the internal structure of a first external connection apparatus 64z.

In the fifth embodiment, a PTO gear 70z includes the rotational force transmission section 71 and a shaft section 73z. The shaft section 73z includes the first gear side bearing support section 74 (not illustrated), the second gear side bearing support section 75, and a spline shaft 80z. The first external connection apparatus 64z includes a boss section 85. The boss section 85 includes a spline groove 86 on the internal circumferential surface on the side for coupling with the spline shaft 80z. The spline groove 86 meshes with the spline shaft 80z. The boss section 85 includes a hole section 85i on the axial outward side of the spline groove 86. An oil drain hole 87 is provided that extends from the internal circumferential surface of the hole section 85i in the radial outward direction and passes through the boss section 85. The housing 90z includes an extending section 95z that is longer than the extending section 95 of the fourth embodiment.

Lubricating oil supplied from the oil inlet path 93y passes between the rolling elements 83c of the second bearing 83 and reaches an oil sump section 97z. The lubricating oil that is retained in the oil sump section 97z passes through the spline fitting section of the spline shaft 80z and the spline groove 86 and flows into the hole section 85i. The lubricating oil that has flowed into the hole section 85i passes through the oil drain hole 86 and returns to the oil sump section 97z. When a predetermined amount or more of the lubricating oil is retained in the oil sump section 97z, the lubricating oil passes through the oil drain path 99b and flows out. According to the above configuration, the lubricating oil that lubricates the spline fitting section of the spline shaft 80z and the spline groove 86 circulates.

**Industrial Applicability**

Provided is a power transmission device having a structure in which a reduction in the lubricity of a spline fitting section can be suppressed, and a work vehicle provided with the power transmission device.

**Claims**

1. A power transmission device comprising:

   a boss section including a spline groove on an internal circumferential surface thereof;
   a spline shaft that fits to the spline groove;
   a rotational force transmission section coupled to the boss section or the spline shaft; and
   a housing including an oil sump section for retaining lubricating oil, the oil sump section being in communication with a fitting section at which the spline shaft and the spline groove are fitted to each other, an oil inlet path for introducing the lubricating oil into the oil sump section, and an oil drain path for draining lubricating oil retained in the oil sump section, the oil drain path being positioned higher than a lower end of the spline groove.

2. The power transmission device according to claim 1, wherein

   the housing or the boss section includes a protruding section positioned on an axial inward side of the oil sump section.

3. The power transmission device according to claim 2, further comprising:

   a bearing rotatably supporting the boss section, wherein
   the protruding section overlaps a region between an inner ring and an outer ring of the bearing as seen in a direction of a rotational axis of the bearing

4. The power transmission device according to any one of claims 1 to 3, wherein

   the oil drain path is positioned higher than an upper end of the spline groove.

5. The power transmission device according to any one of claims 1 to 4, wherein

   the boss section includes an oil drain hole extending from a lubricating oil intake port positioned on an internal circumferential surface further to an axial depth side than the spline groove, to a lubricating oil drainage port positioned on an external circumferential surface of the boss section.

6. The power transmission device according to claims 2, 3 or claims 4, 5 dependent on claim 2 or 3, wherein

   the protruding section is provided on the housing,

a first gap is provided between the protruding section and the boss section, and
at least a portion of the first gap is positioned further to the axial inward side than an oil discharge port of the oil inlet path and a drain port of the oil drain path.

7. The power transmission device according to claim 6, further comprising a first seal that seals the first gap.

8. The power transmission device according to claims 2, 3 and claims 4, 5 dependent on claim 2 or 3, wherein

the protruding section is provided on the housing,
a second gap is provided between the protruding section and the inner ring of the bearing, and
at least a portion of the second gap is positioned further to the axial inward side than an oil discharge port of the oil inlet path and a drain port of the oil drain path.

9. The power transmission device according to claim 8, further comprising a second seal that seals the second gap.

10. The power transmission device according to any one of claims 1 to 5, wherein

the protruding section is provided on the boss section,
a third gap is provided between the protruding section and the housing, and
at least a portion of the third gap is positioned further to the axial inward side than an oil discharge port of the oil inlet path and a drain port of the oil drain path.

11. The power transmission device according to claim 10, further comprising a third seal that seals the third gap.

12. The power transmission device according to claim 3 and claims 4, 5 dependent on claim 3, wherein

the protruding section is provided on the boss section,
a fourth gap is provided between the protruding section and the outer ring of the bearing, and
at least a portion of the fourth gap is positioned further to the axial inward side than an oil discharge port of the oil inlet path and a drain port of the oil drain path.

13. The power transmission device according to claim 12, further comprising a fourth seal that seals a fourth gap between the protruding section and the outer ring of the bearing.

14. The power transmission device according to any one of claims 6 to 9, wherein

the oil drain path passes through the protruding section in the axial direction.

15. The power transmission device according to claim 2 and any one of claims 3 to 14 dependent on claim 2, wherein

the oil drain path is provided in the housing, extends in the radial outward direction from a drain port positioned further to the axial outward side than the protruding section, and passes through the housing.

16. The power transmission device according to any one of claims 2 to 15, wherein

the protruding section is formed as a separate part from the boss section and from the housing, and
the protruding section is fixed to the boss section or the housing.

17. The power transmission device according to any one of claims 1 to 16, wherein

an amount per unit of time of lubricating oil flowing into the oil sump section from the oil inlet path is equal to or greater than an amount per unit of time of lubricating oil flowing out from a location other than the oil drain path of the oil sump section.

18. The power transmission device according to claim 17, wherein

an amount per unit of time of lubricating oil flowing into the oil sump section from the oil inlet path is equal to a total amount of the amount per unit of time of the lubricating oil flowing out from the oil drain path and the amount per unit of time of the lubricating oil flowing out from the location other than the oil drain path.

19. The power transmission device according to claims 17 or 18, wherein

the lubricating oil flowing out from the location other than the oil drain path includes lubricating oil flowing out from the fitting section.

20. The power transmission device according to any one of claims 17 to 19 dependent on claim 6, wherein

the lubricating oil flowing out from the location other than the oil drain path includes lubricating oil flowing out from the first gap.

21. The power transmission device according to any one of claims 17 to 19 dependent on claim 8, wherein

the lubricating oil flowing out from the location other than the oil drain path includes lubricating oil flowing out from the second gap.

22. The power transmission device according to any one of claims 17 to 19 dependent on claim 10, wherein

the lubricating oil flowing out from the location other than the oil drain path includes lubricating oil flowing out from the third gap.

23. The power transmission device according to any one of claims 17 to 19 dependent on claim 12, wherein

the lubricating oil flowing out from the location other than the oil drain path includes lubricating oil flowing out from the fourth gap.

24. A work vehicle comprising:

the power transmission device according to claim 2 and according to claims 3 to 23 dependent on claim 2; and
a first external connection apparatus fixed to the housing,
wherein
the first external connection apparatus includes the spline shaft, and
the oil sump section is formed within a region surrounded by the first external connection apparatus, the protruding section, the boss section, and the spline shaft.

25. The work vehicle according to claim 24, further comprising:

a second external connection apparatus fixed to a side surface of the housing which is an opposite side of a side surface of the housing to which the first external connection apparatus is fixed, the second external connection apparatus including a drive shaft inserted into a hole section of the boss section.

26. The work vehicle according to claim 24 or 25, further comprising:

a driving source including an output shaft configured to rotate around a rotating shaft different from the spline shaft;
a transmission coupled to the output shaft, and
a power train coupled to the output shaft, the power train transmitting a portion of driving power from the driving source to the rotational force transmission section.

FIG. 1

FIG. 2

FIG. 3

# FIG. 4

(a)

(b)

# FIG. 5

# FIG. 6

FIG. 7

# FIG. 8

(a)

(b)

## FIG. 9

## FIG. 10

# FIG. 11

(a)

(b)

# FIG. 12

# FIG. 13

# FIG. 14

(a)

(b)

## FIG. 15

## FIG. 16

# FIG. 17

25u

93x  114e  92a  83b
                    83c  }83
                    83a

90

108
72u

71e

73e  72c 116e  75

# FIG. 18

25v

114e {125
      124

93x  92a  83b
            83c  }83
            83a

90

108
72u

71e

73e  72c  90v  75

FIG. 19

**INTERNATIONAL SEARCH REPORT**

| International application No. |
| --- |
| PCT/JP2015/066521 |

A. CLASSIFICATION OF SUBJECT MATTER
*F16H57/04*(2010.01)i

According to International Patent Classification (IPC) or to both national classification and IPC

B. FIELDS SEARCHED

Minimum documentation searched (classification system followed by classification symbols)
F16H57/04

Documentation searched other than minimum documentation to the extent that such documents are included in the fields searched
Jitsuyo Shinan Koho      1922–1996   Jitsuyo Shinan Toroku Koho    1996–2015
Kokai Jitsuyo Shinan Koho   1971–2015   Toroku Jitsuyo Shinan Koho    1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 4-51247 Y2 (Daikin Manufacturing Co., Ltd.), 02 December 1992 (02.12.1992), column 3, line 39 to column 6, line 3; fig. 1 to 2 (Family: none) | 1-26 |
| Y | JP 2015-90213 A (Unicarriers Corp.), 11 May 2015 (11.05.2015), paragraphs [0021] to [0029]; fig. 2 to 4 (Family: none) | 1-26 |

☒  Further documents are listed in the continuation of Box C.       ☐  See patent family annex.

| | |
| --- | --- |
| *       Special categories of cited documents: | "T"   later document published after the international filing date or priority date and not in conflict with the application but cited to understand the principle or theory underlying the invention |
| "A"   document defining the general state of the art which is not considered    to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 31 August 2015 (31.08.15) | 08 September 2015 (08.09.15) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

| | International application No. |
|---|---|
| | PCT/JP2015/066521 |

C (Continuation).   DOCUMENTS CONSIDERED TO BE RELEVANT

| Category* | Citation of document, with indication, where appropriate, of the relevant passages | Relevant to claim No. |
|---|---|---|
| Y | CD-ROM of the specification and drawings annexed to the request of Japanese Utility Model Application No. 20941/1992 (Laid-open No. 71525/1993) (Komatsu Ltd.), 28 September 1993 (28.09.1993), paragraphs [0007] to [0008]; fig. 2 (Family: none) | 5-26 |
| A | JP 2-18847 Y2  (Nissan Kohki Co., Ltd.), 25 May 1990 (25.05.1990), column 3, line 22 to column 4, line 15; fig. 1 to 2 (Family: none) | 1-26 |
| A | JP 2011-169430 A  (Honda Motor Co., Ltd.), 01 September 2011 (01.09.2011), paragraph [0023]; fig. 3 to 4 (Family: none) | 1-26 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013241792 A